# EUROPEAN PATENT SPECIFICATION

(11) **EP 1 880 131 B1**
(45) Date of publication and mention of the grant of the patent: **09.04.2014**
(21) Application number: 05714478.4
(22) Date of filing: 22.02.2005
(51) Int. Cl.: F16K 7/16, F16K 11/22, G01N 30/20, G01N 30/24

(54) **DIAPHRAGM-SEALED VALVE, ANALYTICAL CHROMATOGRAPHIC SYSTEM AND METHOD USING THE SAME**
VENTIL MIT MEMBRANVERSCHLUSS, ANALYTISCHES CHROMATOGRAPHIESYSTEM UND DIESES VERWENDENDE VERFAHREN
ROBINET A MEMBRANE, SYSTEME D'ANALYSE CHROMATOGRAPHIQUE ET PROCEDE LES UTILISANT

(43) Date of publication of application: 23.01.2008
(73) Proprietor: MÉCANIQUE ANALYTIQUE INC., Thetford-Mines, QC G6G 5W6 (CA)
(72) Inventor: GAMACHE, Yves, Adstock, Québec G0N 1S0 (CA); FORTIER, André, Adstock (Québec) G0N 1S0 (CA)
(74) Representative: Verriest, Philippe
(86) International application number: PCT/CA2005/000236
(87) International publication number: WO 2006/089389

(56) References cited:
- EP-A1- 0 002 173
- GB-A- 1 269 498
- US-A- 3 085 440
- US-A- 5 601 115
- US-A- 5 706 859
- US-B1- 6 227 034

## Description

### FIELD OF THE INVENTION

The present invention generally relates to a diaphragm-sealed valve for fluid analytical systems, and more particularly concerns a diaphragm-sealed valve having improved characteristics. The present invention also concerns an analytical chromatographic system and an analytical chromatographic method using such a diaphragm-sealed valve.

### BACKGROUND OF THE INVENTION

As well known from people involved in the art, chromatographic systems rely on the use of valves to allow reproducible sample introduction and various column switching schemes.

Today, in the chromatographic field, there are mainly two types of valves used: the rotary valves and the diaphragm-sealed valves. The rotary type, as the name suggests, uses a rotary movement to switch or divert various flow paths required for a particular application. Description of such valves may be found in US patent application by the same Applicant published under No. 2006-0042686.

The rotary chromatographic valves are well suited for liquid applications, even if they are also suitable for gas applications. Their design allows the use of various materials to provide inertness or very long lifetime, and relatively high working pressure and temperature which can be required in various liquid chromatography applications. The actuating means used to actuate a rotary valve is generally a pneumatic rotary one or an electrical motor equipped with some gear to increase the torque needed to rotate the valve. In both cases, these assemblies, i.e. actuating means and valve, require a relatively large amount of room in a system. Furthermore, in cases where a pneumatic actuator is used, extra 3-way solenoid valves must be used to allow pneumatic gas to be switched.

In the bulk gas analysis like He, H2, 02, N2, Ar, Kr, Xe, Ne, CO, CO2, CH4, THC, H2O and some other gases, the working pressure and temperature of the chromatographic system is relatively low compared to liquid chromatography. A diaphragm-sealed chromatographic valve could therefore be used since it is generally well suited for gas chromatography. It would so be advisable and beneficial to use diaphragm-sealed valves instead of rotary valves for gas chromatography wherein the design of a rotary valve may probably be overkilled for low pressure and temperature application in gas chromatography.

A diaphragm-sealed chromatographic valve that would take much less room than a rotary system and that could be built at a lower cost, mainly when compared to rotary valves using ceramic material, while providing a long working lifetime would therefore be very desirable.

For the last forty years, many people have designed diaphragm valves for chromatography. Such diaphragm valves have been used in many commercially available gas chromatographs. They are able to be integrated more easily in a gas chromatograph due to their physical size and since the actuator is embedded in the valve itself. These characteristics make them attractive for gas chromatograph manufacturers. However, their performances are poor. For example, the leak rate from port to port is too high and thus limits the system performance. Moreover, the pressure drop on the valve's ports differs from port to port, causing pressure and flow variation in the system. This causes detrimental effect on column performance and detector baseline. Furthermore, many of them have too much inboard contamination. Such valve designs are shown in US patents Nos. 3,111,849; 3,140,615; 3,198,018; 3,376,894; 3,387,496; 3,417,605; 3,439,542; 3,492,873; 3,545,491; 3,633,426; 4,112,766; 4,276,907; 4,333,500; 5,601,115 and 6,202,698. The general concept of these valves is shown in Figure 1. Other diaphragm-sealed chromatographic valves have been shown for example in documents GB 1269498, US 5706859 or EP 0002173.

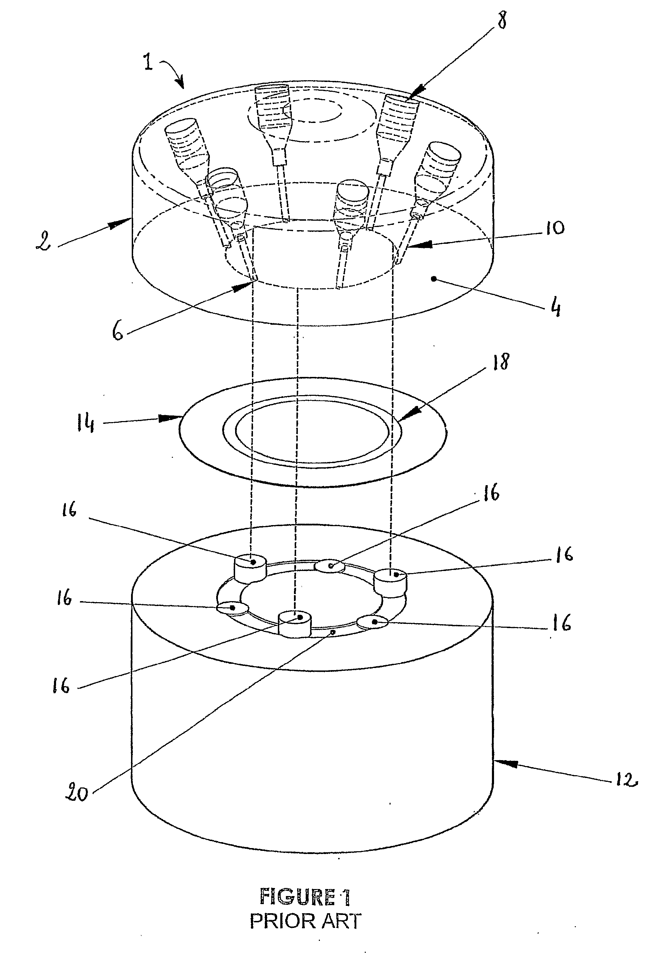

As illustrated in Figure 1, the valve **1** is provided with a top block **2** having an interface **4** and a plurality of ports **6.** Each of the ports **6** opens at the interface **4** and has an inclined thread passage **8** to connect various analytical fitting and tubing (not shown). At the bottom of the inclined thread passage **8,** there is a conduit **10** extending in the top block **2** and opening at the interface **4.** The ports **6** are arranged on a circular line on the interface **4** of the top block **2.** The interface **4** is advantageously flat and polished to minimize leaks between port and from ambient atmosphere. The valve **1** is also provided with a bottom block **12** and a diaphragm **14,** which is generally made of polyimide, Teflon™ or other polymer material. The diaphragm **14** is positioned between the top block interface **4** and the bottom block **12.** The valve **1** is also provided with a plurality of plungers **16,** each being respectively arranged to be able to compress the diaphragm **14** against the top block **2** at a position located between two of the ports **6.** Preferably, as illustrated, when the valve is at rest, three plungers **16** are up while the three others are down. When the plungers are up, they compress the diaphragm **14** against the top block **2** for closing the conduits made by diaphragm recess **18,** so that fluid circulation is blocked. Alternatively, there is fluid flowing between the ports where the corresponding plungers are down. The recess **18** in the diaphragm **14** sits down in the recess **20** made in the bottom block **12,** thereby allowing some clearance for fluid circulation. The bottom block **12** keeps the plungers **16** and the actuating mechanism in position.

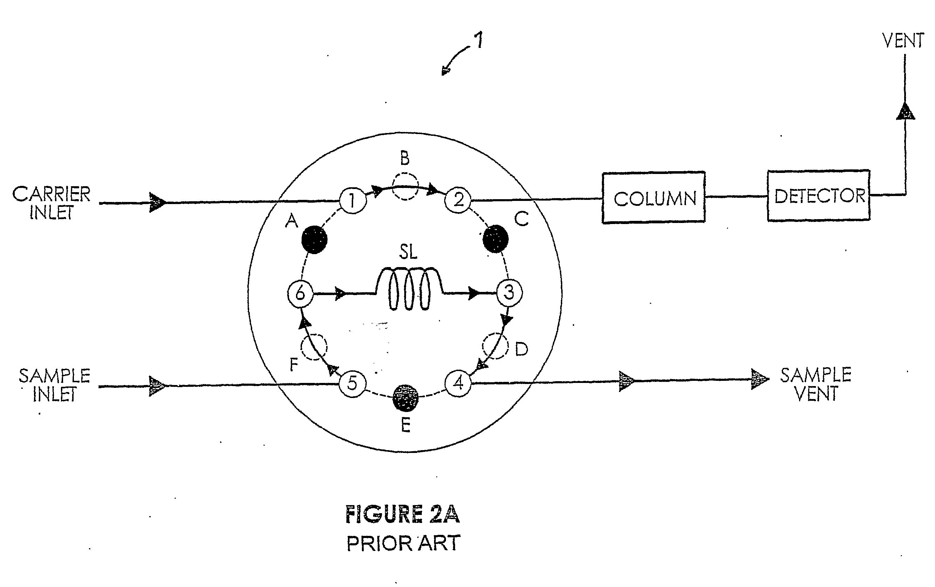

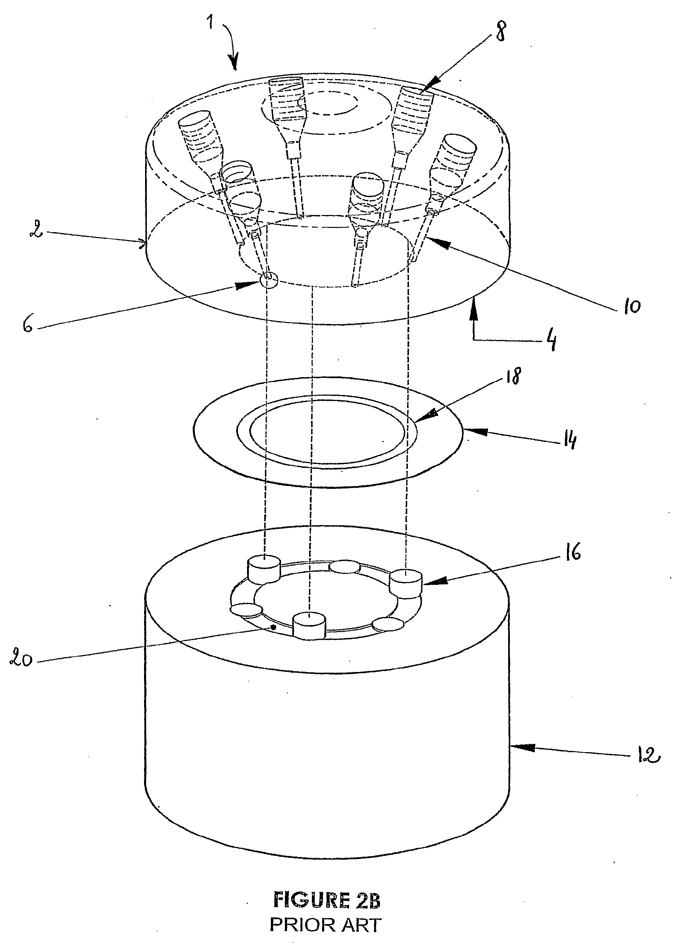

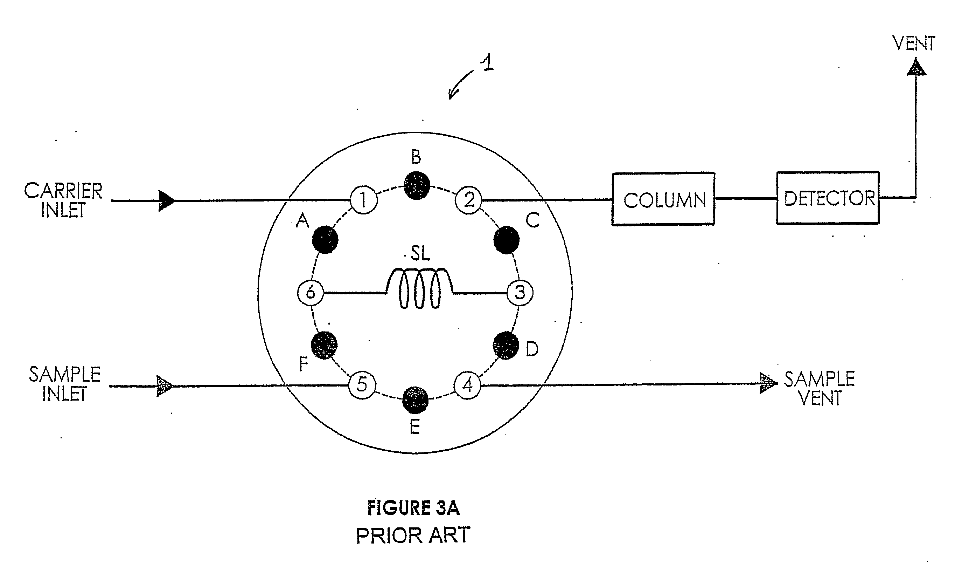

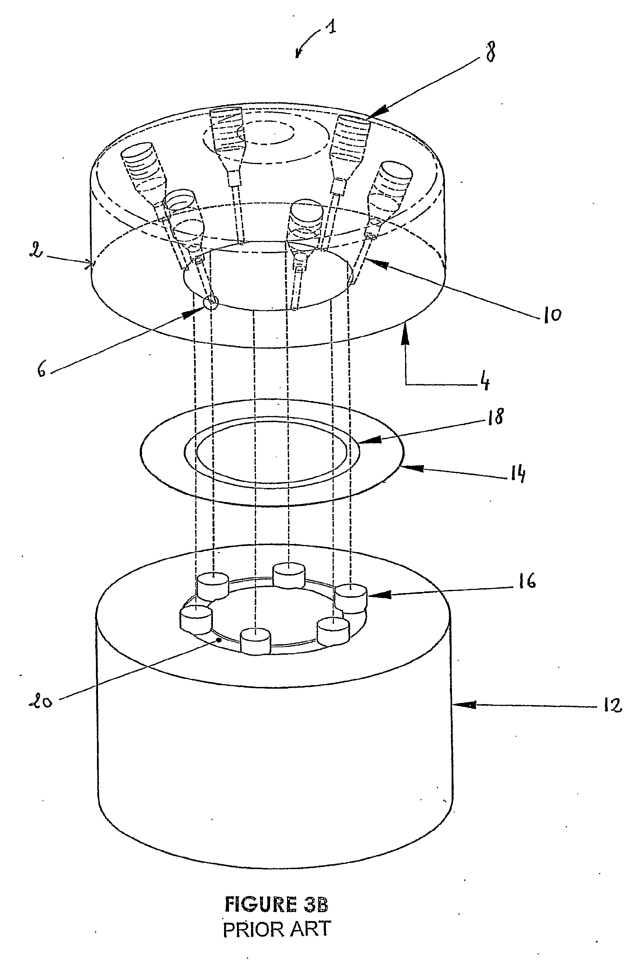

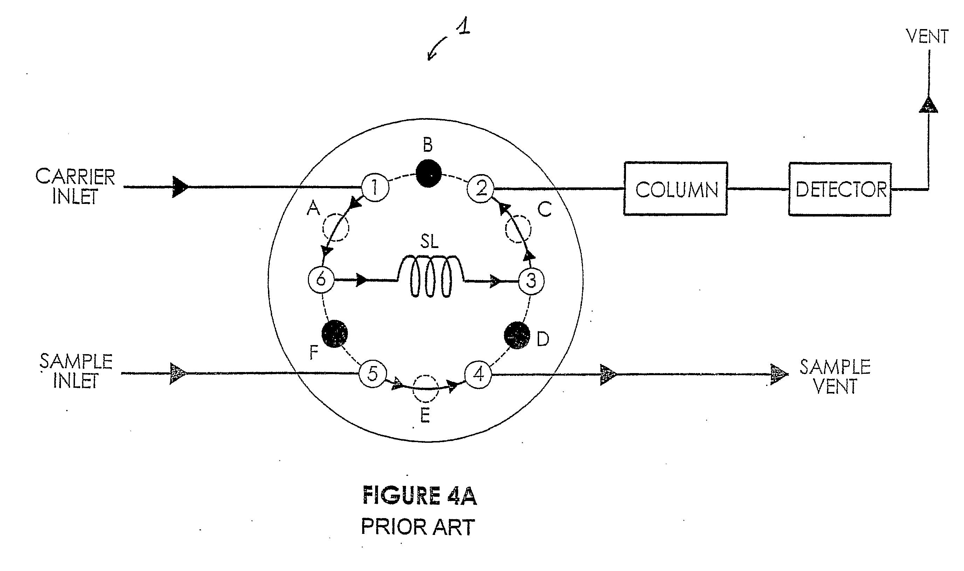

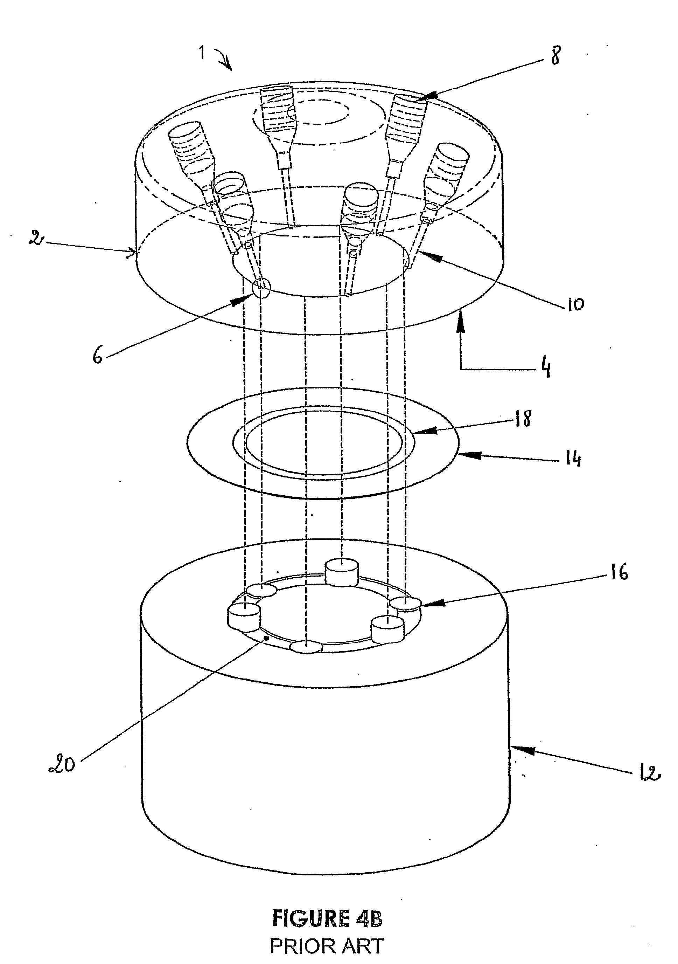

Referring now to Figure 2A, there is shown a typical chromatographic application wherein a sample is injected on a separation column to separate the impurities and then to measure them by the integration of successive signal peaks by the detector, as well known in the art. In Figure 2A, the sample loop SL is swept by the sample gas, while the separation column and the detector are swept by the carrier gas, coming from the valve port #2. To allow this flow path through the valve, the plungers B, D and F are down while the plungers A, C and E are up. The mechanical equivalent of this valve position is shown in Figure 2B. To do a sample injection, all valve ports must first be isolated from each other to avoid cross port leaks that invariably lead to inaccurate measurements. This is done by setting plungers B, D and F in the up position. The valve analytical flow path and mechanical equivalent of this valve position is shown in Figure 3A and 3B. This step is only a temporary intermediate one. Its time duration depends on the actuating mechanism used and the required actuating pneumatic pressure. Then, the sample loop is put in the carrier circuit. This step is generally known as the sampling loop injection position. This is done by moving down plungers A, C and E while keeping plungers B, D and F in the up position. This position is shown on Figure 4A and the mechanical one in Figure 4B. In a similar way, to come back in the sampling position which is illustrated in Figure 2A, the plungers A, C and E are first brought back in the up position. This leads to the intermediate position shown in Figure 3A, i.e. all plungers up. Finally, the plungers B, D and F are brought back down. So, the valve is now in the position shown in Figure 2A, i.e. sampling loop filling position. All the patents that we previously referred use this general concept or some slight variation thereof.

Referring again to Figure 1, the main aspect of this concept is to interrupt the flow between two adjacent ports. For that, the corresponding plunger presses the diaphragm **14,** which is then pressed on the interface **4** of the top block **2.** Thus, the sealing relies simply on the surface of the plunger defining the area that presses the diaphragm recess **18** on the interface **4.** This technique imposes tight tolerances on the surface finish, surface flatness and the plungers' length. Any scratch on the interface **4** or imperfection of the diaphragm **14** will generate leaks. Moreover, the length of all plungers must be the same. Any difference in their lengths will result in leaks, since a shorter plunger will not properly compress the diaphragm against the interface **4.** In the prior art, there are some variations of this general concept. The main one relates to the location of the bottom block recess **20.** In the past, this recess **20** or its equivalent was located internally in the top block **2,** or on its interface **4.** US patents Nos. 3,111,849; 3,198,018; 3,545,491; 3,633,426 and 4,112,766, which were granted to the same group of people, illustrate this concept. However, as they reported in a more recent valve brochure specification entitled "Applied Automation Company, series 11 diaphragm valve", this method has been dropped because of a too high cold flow. Cold flow is also often referred to as cross port flow leak. Their latest design, which was commercialized, uses a flat and polished interface **4** on the top block **2** and a recess **20** in the bottom block **12.** In this design, the diaphragm **14** has no recess. Moreover, in order to reduce the cold flow, it was also envisaged to use two diaphragms. In fact, as disclosed in US patent No. 3,111,849, the use of a "cushion" diaphragm helps to compensate for any slight non-parallelism or length difference of plungers. Other attempts have also been made to correct the non-parallelism, as disclosed in US patents Nos. 3,376,894; 3,545,491 and 3,633,426, wherein the use of solid plungers has been replaced with the use of small steel balls.

The concern about plunger length has also been taken into consideration in US patent No. 6,202,698, granted to Valco Company, which suggests the use of plungers made of softer material. This allows tolerance reduction for the length of such plungers.

However, such designs still result into too much leak rate between ports since the sealing done by the plungers' pressure is not equal on diaphragm.

Other attempts have been made in the past to eliminate problems caused by plunger tolerance variations. US patent No. 3,139,755 discloses a valve wherein no plunger is used. Instead, a hydraulic pressure is used. However, an auxiliary source of pressure must be used since the pneumatic amplification of pneumatic actuating mechanism does not exist. The system, as far as we know, wasn't commercialized. Cross port leaks are still an important problem.

Another design is disclosed in US patent No. 3,085,440. In this valve, the diaphragm has been replaced by an O-ring. Nevertheless, cross port leaks are still too high for modern high sensitivity detector.

In brief, in view of the previously mentioned patents, it can be seen that many attempts have been made to try fixing cross port leaks problems and outboard or inboard contamination. All of the proposed designs are quite similar in regard to sealing mechanisms and have the same drawbacks. For example, US patent No. 3,140,615, granted in 1964, and US patent No. 6,202,698, granted in 2001, do use the same sealing concept in regard to flow switching between ports.

Valco Company did release the DV series valve wherein the diaphragm **14** has an additional recess **18** as illustrated in Figure 1. The recess **18** sits down in the recess **20** of the bottom block **12.** So, when a plunger **16** is in down position, the diaphragm recess **18** sits in the bottom block recess **20,** thereby clearing the passage between two adjacent ports, reducing the pressure drop and helping to operate with a low pressure sample.

Finally, it can be seen from the various brochures used to market these valves that the lifetime of these valves is mostly stated in terms of actuations. Most of the time, the number of actuations stated is between 500,000 and 1,000,000. However, it appears that this specification is related to the actuating mechanism and not to the leak rate of the valve. In this aspect, the diaphragm type valve's specifications are not as well defined as the rotary type valve, wherein it is clear that the lifetime of the valve is expressed in terms of leaks.

Besides, a brand new diaphragm valve will often have too many leaks between ports for low level applications. Moreover, it appears that when the valve is at rest for a long period of time, it doesn't perform well when put back in service. This is caused by the diaphragm getting compressed and marked where the plungers press it. It is even worst for valves having fine edge plungers defining a ring type sealing surface.

Thus, the diaphragm type gas chromatography valves of the prior art have several disadvantages: they present too much cross port leaks and too much pressure drop on selected adjacent ports. Moreover, they are difficult to operate when sample pressure is low and they cannot conveniently work with subatmospheric sample pressure. Furthermore, they rely on tight tolerance of plungers' length, to minimize cross port leaks.

Therefore, it would be desirable to provide a diaphragm-sealed valve that would overcome the above-mentioned drawbacks of the diaphragm valves of the prior art while being less expensive to manufacture.

### SUMMARY OF THE INVENTION

An object of the present invention is to provide a diaphragm-sealed valve that satisfies the above-mentioned needs.

The present invention provides a diaphragm-sealed valve according to claim 1, an analytical chromatographic system as defined in claim 15 and an analytical chromatographic method as defined in claim 26.

### BRIEF DESCRIPTION OF THE DRAWINGS

These and other objects and advantages of the invention will become apparent upon reading the detailed description and upon referring to the drawings in which :
FIGURE 1 (PRIOR ART) is an exploded perspective view of a diaphragm-sealed valve known in the art.
FIGURE 2A (PRIOR ART) is a schematic representation of a prior typical chromatographic application using a six-port valve, the valve being in a sampling position.
FIGURE 2B (PRIOR ART) is an exploded perspective view of the diaphragm-sealed valve shown in FIGURE 2A.
FIGURE 3A (PRIOR ART) is a schematic representation of the valve shown in FIGURE 2A, the valve being in an intermediate position.
FIGURE 3B (PRIOR ART) is an exploded perspective view of the valve shown in FIGURE 3A.
FIGURE 4A (PRIOR ART) is a schematic representation of the valve of FIGURE 2A, the valve being in a sample injection position.
FIGURE 4B (PRIOR ART) is an exploded perspective view of the valve shown in FIGURE 4A.
FIGURE 5A is a top view of a preferred embodiment of the first body of a diaphragm-sealed valve of the present invention.
FIGURE 5B is a cross-sectional side view taken along line A-A of the diaphragm-sealed valve shown in FIGURE 5A.
FIGURE 6A is a top view of a port of the valve shown in FIGURE 5B, the port being in an open position.
FIGURE 6B is a cross-sectional side view of the port shown in FIGURE 6A.
FIGURE 6C is a top view of the port shown in FIGURE 6A, the port being in a closed position.
FIGURE 6D is a cross-sectional view of the port shown in FIGURE 6C.
FIGURE 7A is a top view of the first body shown in FIGURE 5A, the ports being in a predetermined position.
FIGURE 7B is a schematic representation of the ports shown in FIGURE 7A.
FIGURE 7C is a top view of the first body shown in FIGURE 5A, the ports being in another position.
FIGURE 7D is a schematic representation of the ports shown in FIGURE 7C.
FIGURE 7E is a top view of the first body shown in FIGURE 5A, the ports being in another position.
FIGURE 7F is a schematic representation of the ports shown in FIGURE 7E.
FIGURE 7G is a top view of the first body shown in FIGURE 5A, the ports being in another position.
FIGURE 7H is a schematic representation of the ports shown in FIGURE 7G.
FIGURE 8 is a top view of another preferred embodiment of the first body of a diaphragm-sealed valve of the present invention.
FIGURE 9A is a schematic representation of a typical chromatographic application using the valve of the present invention shown in FIGURE 5, the valve being in the sampling position.
FIGURE 9B is a schematic representation of the chromatographic application illustrated in FIGURE 9A, the valve being in the intermediate position.
FIGURE 9C is a schematic representation of the chromatographic application illustrated in FIGURE 9A, the valve being in the sample injection position.
FIGURE 10A is an exploded perspective view of a diaphragm-sealed valve, according to another preferred embodiment of the present invention.
FIGURE 10B is a schematic representation of the valve shown in FIGURE 10A, the valve being in the sampling position.
FIGURE 10C is an exploded perspective view of the valve shown in FIGURE 10B.
FIGURE 10D is a schematic representation of the valve shown in FIGURE 10A, the valve being in the intermediate position.
FIGURE 10E is an exploded perspective view of the valve shown in FIGURE 10D.
FIGURE 10F is a schematic representation of the valve shown in FIGURE 10A, the valve being in the sample injection position.
FIGURE 10G is an exploded perspective view of the valve shown in FIGURE 10F.
FIGURE 11 is a schematic representation of an analytical chromatographic method, according to a preferred embodiment of the present invention.
FIGURE 12A illustrates a conventional baseline generated by a prior art valve.
FIGURE 12B illustrates a baseline generated by a preferred embodiment of the valve of the present invention.
FIGURE 13 (PRIOR ART) is a schematic representation of another typical chromatographic application known in the art, the configuration using two six-port valves of the prior art.
FIGURE 14A is a schematic representation of the chromatographic application shown in FIGURE 13, the configuration using a diaphragm-sealed valve of the present invention, the valve being in the sampling position.
FIGURE 14B is a schematic representation of the chromatographic application shown in FIGURE 14A, the valve being in the sample injection position.
FIGURE 14C is schematic representation of the chromatographic application shown in FIGURE 14A, the valve being in the heartcut position.
FIGURE 15A is another schematic representation of the chromatographic application shown in FIGURE 14A.
FIGURE 15B is another schematic representation of the chromatographic application shown in FIGURE 14B.
FIGURE 15C is another schematic representation of the chromatographic application shown in FIGURE 14C.
FIGURE 16A is a schematic representation of another preferred embodiment of the diaphragm-sealed valve of the present invention, the valve being in the sampling position.
FIGURE 16B is a schematic representation of the valve shown in FIGURE 16A, the valve being in the intermediate position.
FIGURE 16C is a schematic representation of the valve shown in FIGURE 16A, the valve being in the sample injection position.
FIGURE 16D is a schematic representation of another preferred embodiment of the diaphragm-sealed valve of the present invention.
FIGURE 17 is an exploded perspective view of the diaphragm-sealed valve shown in FIGURE 16D.
FIGURE 18 is an exploded perspective view of another preferred embodiment of the diaphragm-sealed valve of the present invention.
FIGURE 19A is a partial cross-sectional side view of the valve shown in FIGURE 18, the valve being in the sampling position.
FIGURE 19B is a partial cross-sectional side view of the valve shown in FIGURE 18, the valve being in the intermediate position.
FIGURE 19C is a partial cross-sectional side view of the valve shown in FIGURE 18, the valve being in the sample injection position.
FIGURE 20A is an exploded perspective view of another preferred embodiment of the diaphragm-sealed valve of the present invention.
FIGURE 20B is a cross sectional view of the valve actuator shown in FIGURE 20A.

While the invention will be described in conjunction with example embodiments, it will be understood that it is not intended to limit the scope of the invention to such embodiments. On the contrary, it is intended to cover all alternatives, modifications and equivalents as may be included as defined by the appended claims.

### DESCRIPTION OF PREFERRED EMBODIMENTS

In the following description, similar features in the drawings have been given similar reference numerals and, in order to weight down the figures, some elements are not referred to in some figures if they were already identified in a precedent figure.

The present invention concerns a diaphragm-sealed valve, also referred to as a diaphragm based tight shut off valve, mostly dedicated for analytical equipments, and more particularly chromatographic equipments or on line analyzers. The present invention also concerns chromatographic systems and chromatographic methods based on the use of at least one diaphragm-sealed valve. As will be greater detailed herein below, these systems and methods are based on the use of at least one diaphragm-sealed valve, which, in a first preferred embodiment can be referred to as a three way switching cell. This switching cell has one common port and two actuated ports, these actuated ports being advantageously independently actuated. Thus, each of the independently actuated ports is preferably independently controlled in a way that both could be open or closed at the same time or one could be open while the other is closed and vice versa. Moreover, the fluid flowing through the common port could be allowed to flow to or from any one of the independently actuated ports at the same time or in a predetermined sequence.

In preferred embodiments of the present invention which will be described below, a plurality of three way switching cells are advantageously used to allow more complex flow path switching schemes. By interconnecting together various switching cells, a typical chromatographic diaphragm valve could be done. In the case an elementary cell is used, the switching steps could be: make before break, break before make, all ports opened or all ports closed. These switching steps are not available with standard three way valves.

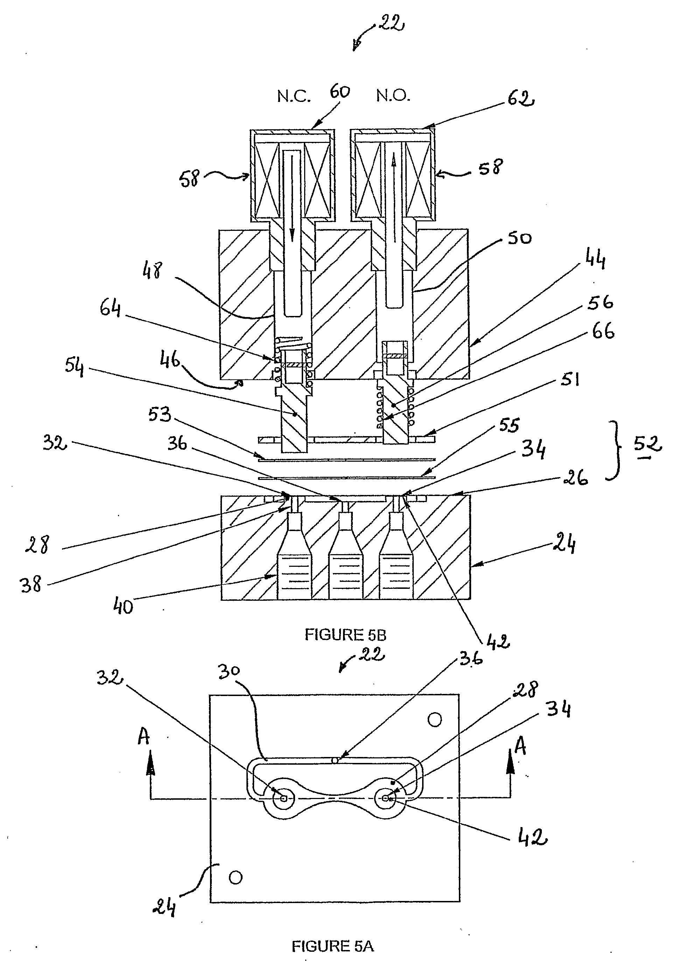

Referring to Figures 5A and 5B, there is shown a first preferred embodiment of the present diaphragm-sealed valve, which can be referred to as a three way switching cell. The illustrated diaphragm-sealed valve **22** is provided with a first body **24** having a first interface **26** provided with a recessed fluid communication channel **28** extending therein. The recessed fluid communication channel **28** preferably has a loop shaped portion **30.** The first body **24** has a first, a second and a common fluid port, respectively **32, 34** and **36.** As known in the art, each of the ports is preferably provided with a fluid passage **38** connected to a threaded hole **40** providing tubing connections. Each of the ports **32, 34, 36** opens into the recessed fluid communication channel **28** for interconnecting each of the ports together through the fluid communication channel **28,** which acts as a fluid conduct. Each of the first and second ports **32, 34** is provided with a seat **42** disposed so as to allow fluid communication therearound within the communication channel **28.** Preferably, and as illustrated, the seat **42** of each of the first and second ports **32, 34** has a raised portion, which can preferably extend at the interface level **26.** More preferably, the raised portions of the seats **42** of the ports **32, 34** are lower than the interface **26** to give room for the seal member **52** vertical movement, as will be greater detailed below. The diaphragm-sealed valve **22** is also provided with a second body **44** interconnected with the first body **24,** preferably by any convenient attaching means known in the art such as a set of screws (not shown). The second body **44** has a second interface **46** facing the first interface **26.** The second body **44** also has a first and a second passage **48, 50.** Each of the passages **48, 50** faces one of the first and second ports **32, 34** respectively. The valve **22** is also provided with a seal member **52** compressibly positioned between the first and second interfaces **26, 46.** The seal member **52** has a shape adapted to cover the first and second ports **32, 34,** and advantageously the entire fluid communication channel **28** to act as a seal for inboard or outboard contaminations. This seal member **52** allows to provide a flow interruption through the corresponding port **32** or **34,** when it is pressed against the seat **42** of the port. Preferably, the seal member **52** has a polymer diaphragm **55** and each of the first and second interfaces **26, 46** has a planar and circular shape. More preferably, the seal member **52** has a Teflon™ spacer **51,** a metallic diaphragm **53** which is advantageously a stainless diaphragm, and a polymer diaphragm **55.** Each of these elements is advantageously arranged in a stacked relationship, the polymer diaphragm **55** being pressable against the seat **42** of each of the first and second ports **32, 34.** The valve **22** is also provided with a first and a second plunger **54, 56,** each being respectively slidably disposed in one of the passages **48, 50** of the second body **44.** Each of the plungers **54, 56** has a closed position wherein the corresponding plunger presses down the seal member **52** against the seat **42** of the corresponding port **32, 34** for closing the corresponding port, and an open position wherein the plunger extends away from the seat **42** of the corresponding port **32, 34** for allowing a fluid communication between the corresponding port and the channel **28.** In this preferred embodiment, the Teflon spacer is advantageously provided with a first and a second hole, each for respectively slidably receiving one of the plungers **54, 56.** The valve **22** also has actuating means **58** for actuating each of the plungers **54, 56** between the closed and open positions thereof. Preferably, the actuating means **58** independently actuate each of the plungers **54, 56.** More preferably, the actuating means **58** advantageously have a first and a second solenoid **60, 62,** each respectively actuating one of the first and the second plungers **54, 56.** Nevertheless, it should be noted that any other actuating means that advantageously allow an independent actuation of the plungers **54, 56** could also be envisaged as will be greater detailed thereinafter. Preferably, and as illustrated, the actuating means **58** advantageously have first and second resilient means, preferably a first and a second spring **64, 66,** each being respectively mounted on a corresponding plunger **54, 56** for biasing the corresponding plunger. Each of the spring **64, 66** can advantageously be mounted in two different positions, thereby providing a predetermined resting position for each of the plungers **54, 56.** Thus, different valve configurations can advantageously be obtained at power off. Both plungers **54, 56** can be forced up or down. In the illustrated preferred embodiment, the spring **64** associated with the solenoid **60** is mounted to force the plunger **54** down while the spring **66** associated to the solenoid **62** is mounted to force the plunger **56** up. This results in a configuration normally closed (NC) between port **32** and **36,** and normally open (NO) between port **34** and **36,** when there is no power on the solenoids **60** and **62.**

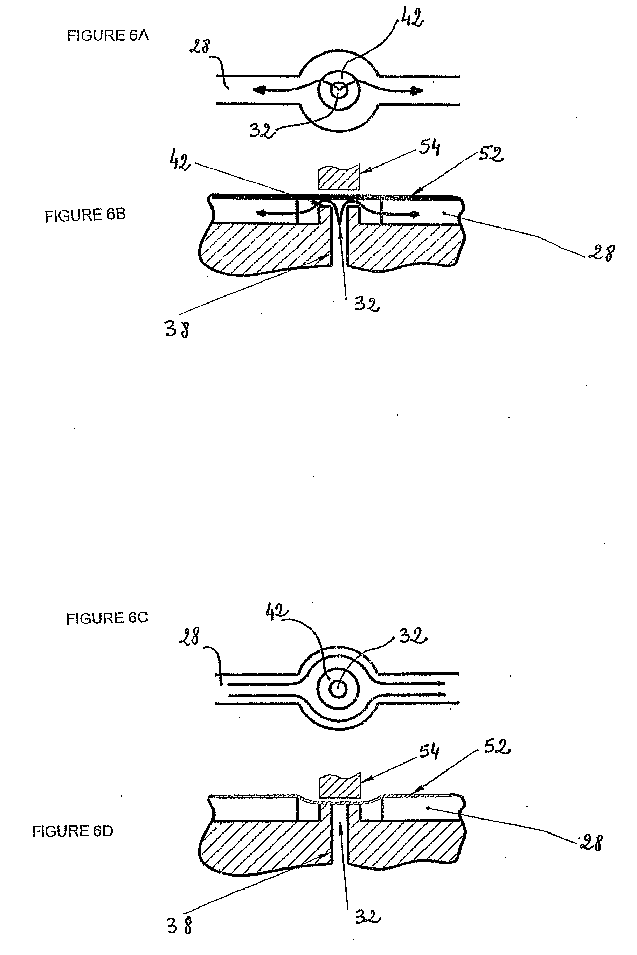

Referring now to Figures 6A to 6D, there is illustrated the working principle of one of the first and second ports **32, 34.** In Figures 6A and 6B the port **32** is open, so the fluid is allowed to flow through port **32** and then in each direction away from the seat **42.** Of course, according to a particular application, the fluid could flow from or to the port **32.** In Figures 6C and 6D, the port **32** is shown in the closed position. The fluid from the other ports is allowed to flow around the seat **42** in the fluid communication channel **28.**

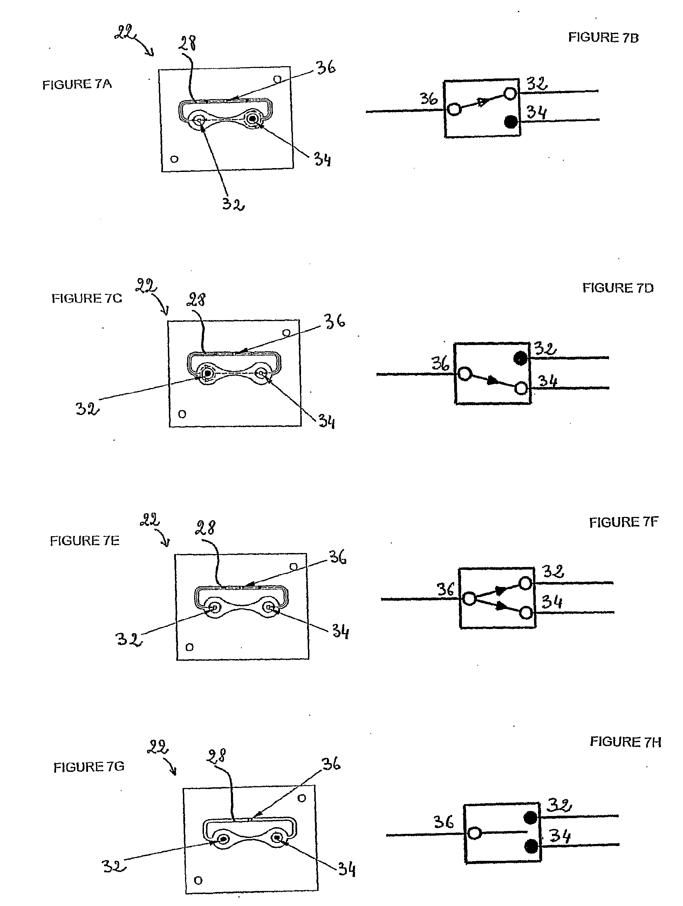

Figures 7A to 7H illustrate the different fluid flow paths and the schematic equivalents which can be obtained with the present valve. Figures 7A and 7B show the port **32** in the open position while port **34** is in the closed position. Figures 7C and 7D show the port **32** closed while the port **34** is opened. Figures 7E and 7F show both ports **32, 34** open while Figures 7G and 7H show both ports **32, 34** closed.

An important characteristic of the invention can be deducted from Figures 6 and 7. In anyone valve positions, there is no dead volume since there is always fluid flowing around the seat **42** and in the loop shaped portion **30** of the fluid communication channel **28.** So there is no dead volume effect generated by the valve since the channel **28** always appears like a fluid conduit or tubing.

Another important aspect of the present invention is the independent control of the ports **32** and **34.** This allows the different valve positions shown in Figures 7A to 7H. Moreover, the valve timing between actuation steps can be easily controlled by a control means (not shown) operatively connected to the actuating means **58.** For example, when switching from port **32** to **34,** the actuation step could be make before break or break before make.

The fact of sealing the ports **32** and **34** by pressing the diaphragm **52** thereon results in a positive sealing effect. Indeed, it seals completely the port **32** or **34** and totally blocks the fluid flow therefrom or thereinto. So, relatively high pressure could be applied to the ports **32, 34** without generating any leak nor any detrimental impact on the analytical results.

Moreover, in a preferred embodiment, the plungers **54, 56** can advantageously be tied to the diaphragm **52.** Thus, when the plunger **54** or **56** is in the open position, it pulls up the diaphragm **52** from the port **32** or **34.** This has for effect of clearing completely the corresponding port seat **42.** So, there is very little pressure drop on the port and the pressure is similar for any of the ports **32, 34.**

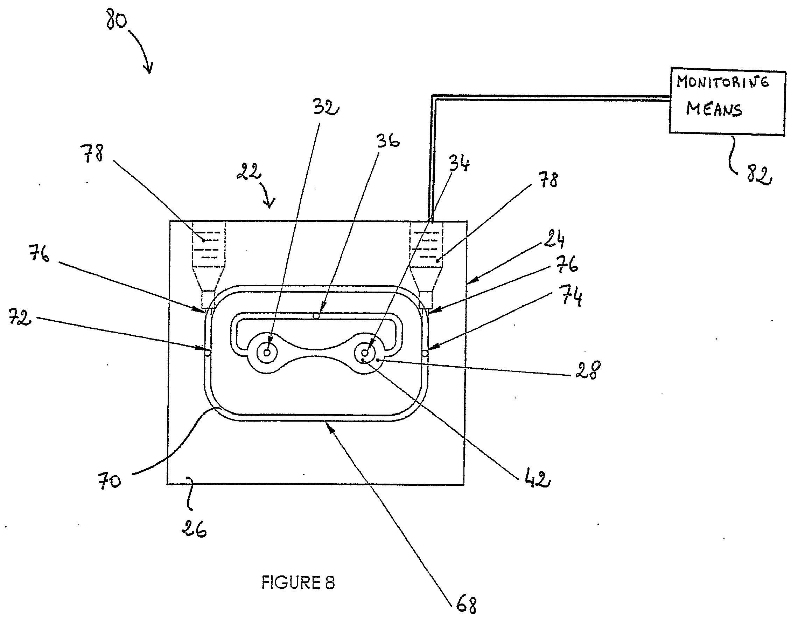

Furthermore, the valve of the present invention advantageously allows sub atmospheric pressure operation. Indeed, Figure 8 shows another preferred embodiment of the present invention, wherein the valve **22** further has a purge circulation line **68.** The purge circulation line **68** is provided with an annular recess **70** extending in the first interface **26** and surrounding the fluid communication channel **28.** The purge circulation **68** line also has a fluid inlet **72** and a fluid outlet **74,** each having an opening lying in the annular recess **70** for providing a continuous fluid flow in the annular recess **70.** Preferably, the fluid inlet and outlet **72, 74** are each provided with a fluid passage **76** and an associated threaded hole **78** for allowing tubing connections. Thus, a clean purging fluid can advantageously be allowed to flow through the purge circulation line **68,** thereby evacuating any inboard and outboard contamination and any fluid process leak. This concept is detailed in the above mentioned US patent application published under No. 2006-0042686.

Still referring to Figure 8, the valve of the present invention can also advantageously be used in an analytical chromatographic system **80** to provide a system having improved characteristics. Indeed, such an analytical chromatographic system **80** is advantageously provided with a diaphragm-sealed valve **22** as defined above and provided with a purge circulation line **68.** The analytical system **80** is also advantageously provided with monitoring means **82** operatively connected to the fluid outlet **74** for monitoring a fluid passing therethrough. In a preferred embodiment, the monitoring means **82** have a purity detector for detecting contamination of said fluid. Preferably, the monitoring means **82** are adapted to monitor the fluid passing through the purge circulation line **68** continuously.

As already explained, as a first application, the valve could be used as a simple three way type switching valve used to switch between two streams. However, an interesting aspect of the present invention is revealed when we combine together a plurality of elementary switching cells **22** as previously described

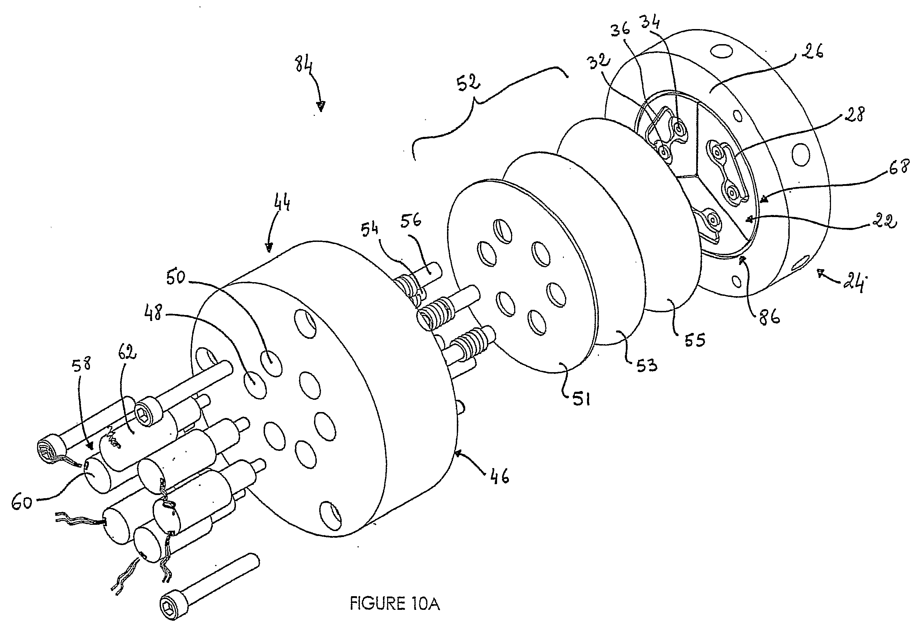

Accordingly, referring now to Figures 10A to 10G, there is shown another diaphragm sealed valve according to another preferred embodiment of the present invention which uses a plurality of elementary switching cells **22.** Indeed, in this preferred embodiment, the diaphragm-sealed valve **84** is provided with a first body **24** having a first interface **26** provided with a plurality of distinct recessed fluid communication channels **28** extending therein. The first body **24** has a plurality of port sets, each comprising a first, a second and a common fluid port **32, 34, 36.** Each port of a corresponding set opens into a corresponding one of the recessed fluid communication channels **28** respectively for interconnecting each port **32, 34, 36** of the corresponding set together through the corresponding fluid communication channel **28** respectively. Each of the first and second ports **32, 34** of each of the sets is provided with a seat **42** disposed so as to allow fluid communication therearound within the corresponding communication channel **28.** As already explained with reference to FIGURES 5A and 5B, each of the seats **42** of the first and second ports **32, 34** is preferably lower than the interface **26** for giving sufficient room for the seal member vertical movement. The diaphragm sealed valve **84** is also provided with a second body **44** interconnected with the first body **24** and having a second interface **46** facing the first interface **26.** The second body **44** has a plurality of passage pairs, each comprising a first and a second passage **48, 50.** Each passage **48, 50** of a corresponding pair respectively faces one of the first and second ports **32, 34** of a corresponding set. The diaphragm sealed valve **84** is also provided with a seal member **52** compressibly positioned between the first and second interfaces **26, 46.** The seal member **52** has a shape adapted to cover each of the first and second ports **32, 34** of all of the port sets. Preferably, the sealed member **52** has a polymer disc **55.** More preferably, as previously described with reference to Figures 5A and 5B the seal member **52** has a Teflon spacer **51,** a metallic diaphragm **53** which is advantageously a stainless diaphragm, and a polymer diaphragm **55.** Each of these elements is advantageously arranged in a stacked relationship, the polymer diaphragm **55** being pressable against the seat **42** of each of the first and second ports **32, 34.** The diaphragm sealed valve **84** is also provided with a plurality of pairs of first and second plungers **54, 56.** Each plunger **54, 56** of a corresponding pair is respectively slidably disposed in one of the passages **48, 50** of a corresponding pair. Each of the plungers **54, 56** has a closed position wherein the corresponding plunger presses down the seal member **52** against the seat **42** of the corresponding port **32, 34** for closing the corresponding port, and an open position wherein the plunger extends away from the seat **42** of the corresponding port **32, 34** for allowing a fluid communication between the corresponding port and a corresponding channel **28.** The diaphragm sealed valve **84** also has actuating means **58** for actuating each of the plungers **54, 56** between the closed and open positions thereof. Preferably, the actuating means **58** independently actuate each of the plungers **54, 56,** as already described above.

Still referring to Figures 10A to 10G, in a further preferred embodiment, the valve is further advantageously provided with a purge circulation line **68.** The purge circulation line **68** has a looped recessed fluid circuit **86** extending in the first interface **26.** The looped fluid circuit **86** has an outer annular recess **88** and an inner recess **90,** each extending in the first interface **26.** The fluid circuit **86** further has a plurality of separation recesses **92** radially extending in the first interface **26.** Each of the separation recesses **92** is connected to each of the outer and inner recesses **88, 90** for defining a plurality of first interface portions **94** isolated from each others. Each of the first interface portions **94** encloses one of the fluid communication channels **28.** The fluid circuit **86** is also provided with a fluid inlet **72** and a fluid outlet **74,** each having an opening lying at the first interface **26.** Each of the inlet and outlet **72, 74** is in continuous fluid communication with a respective one of the outer and inner recesses **88, 90** for providing a continuous fluid flow in the looped recessed fluid circuit **86.** This preferred embodiment is particularly advantageous since it allows to continuously monitor the working of the valve for detecting any undesirable contamination and/or leaks. In another further preferred embodiment, as illustrated, each of the first and second ports **32, 34** is advantageously circularly arranged in a port circle **96** concentrical with the first interface **26.** In another further preferred embodiment, the actuating means **58** advantageously have a plurality of pairs of first and second solenoids **60, 62,** each solenoid of a corresponding pair respectively actuating a corresponding one plunger **54, 56** of a corresponding pair. With the different valve configurations described above, different applications can be envisaged.

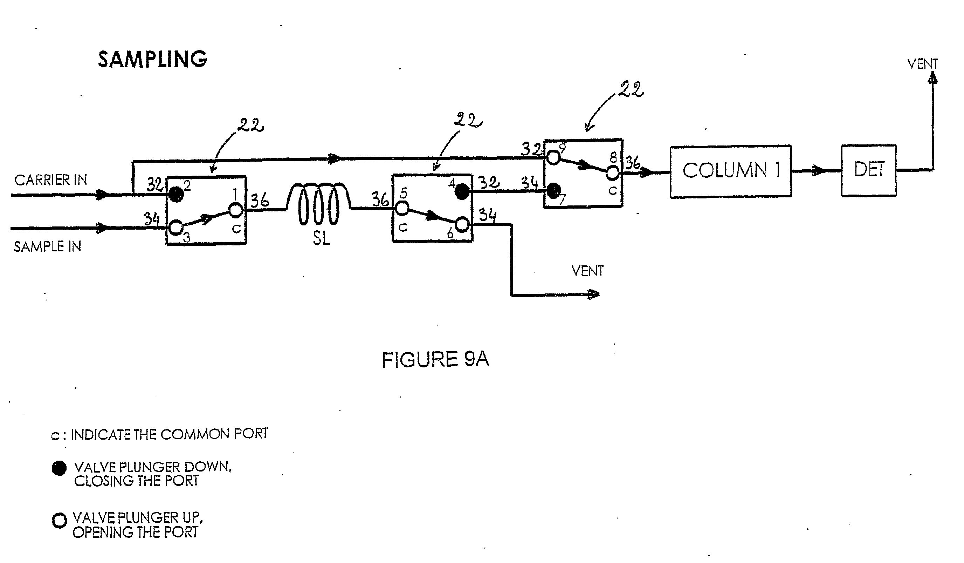

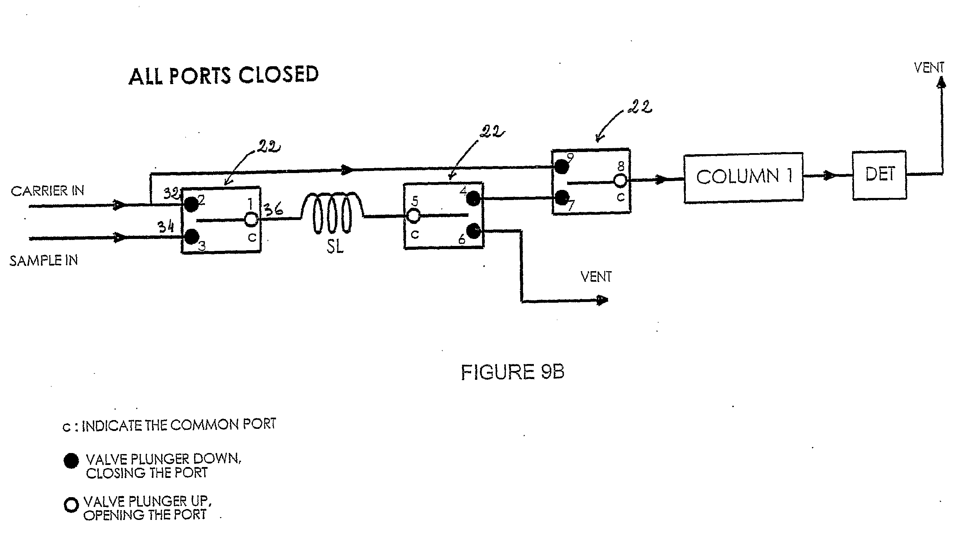

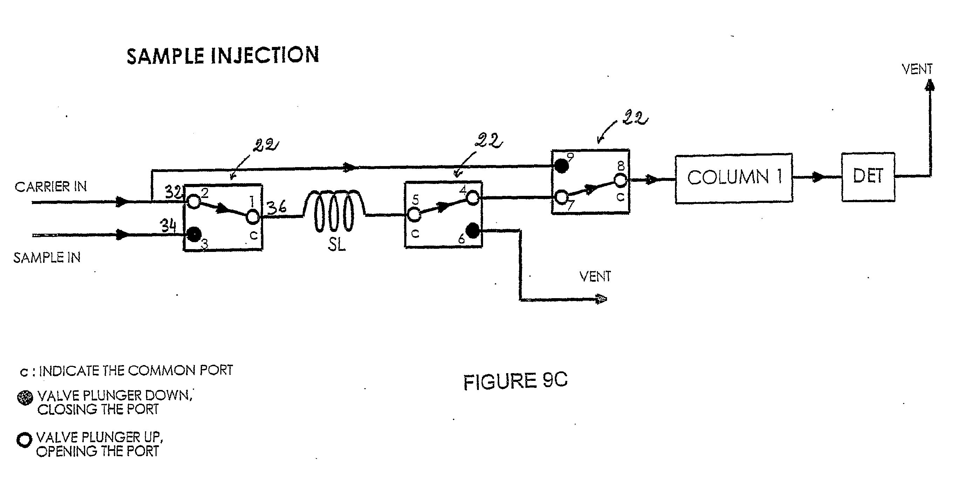

Referring again to Figure 2A, there is shown a typical chromatographic application known in the art, which uses a six port traditional gas chromatographic valve. When the valve is actuated, the sample is injected or put into the carrier circuit as shown in figure 4A. Figures 9A to 9C show schematic representations of the different steps which could be realized with the application illustrated in Figure 2A but realized with the valve **84** of the present invention. In this preferred embodiment of the invention, the valve **84** is provided with three elementary switching cells **22.** Each switching cell **22** is represented by a rectangular box with three small circles identifying the ports. The letter c in the rectangular box identifies the common port **36.** Figure 9A shows the valve **84** at power off. This position is the sampling one like shown in figure 2A. Figure 9B shows the intermediate position wherein all ports **32, 34** are closed to prevent port flow mixing, like in Figure 3A. Finally, Figure 9C shows the sample injection position, like in Figure 4A.

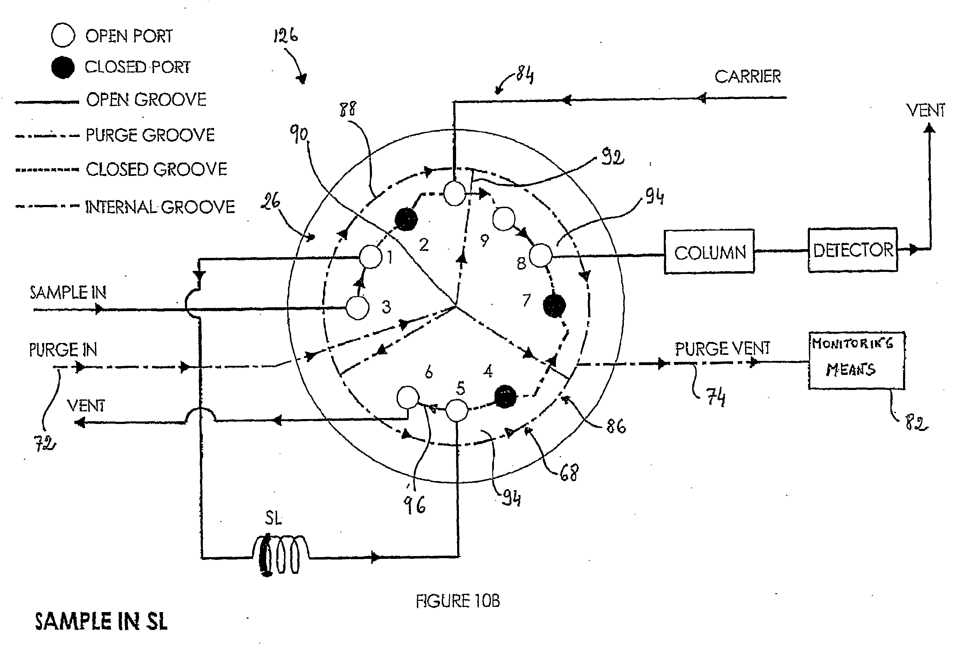

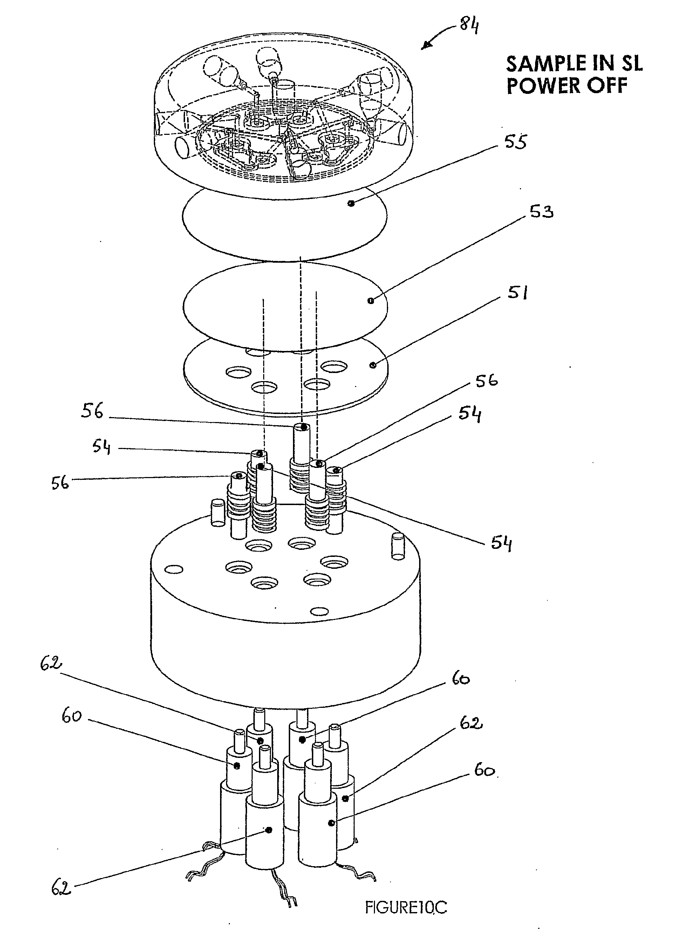

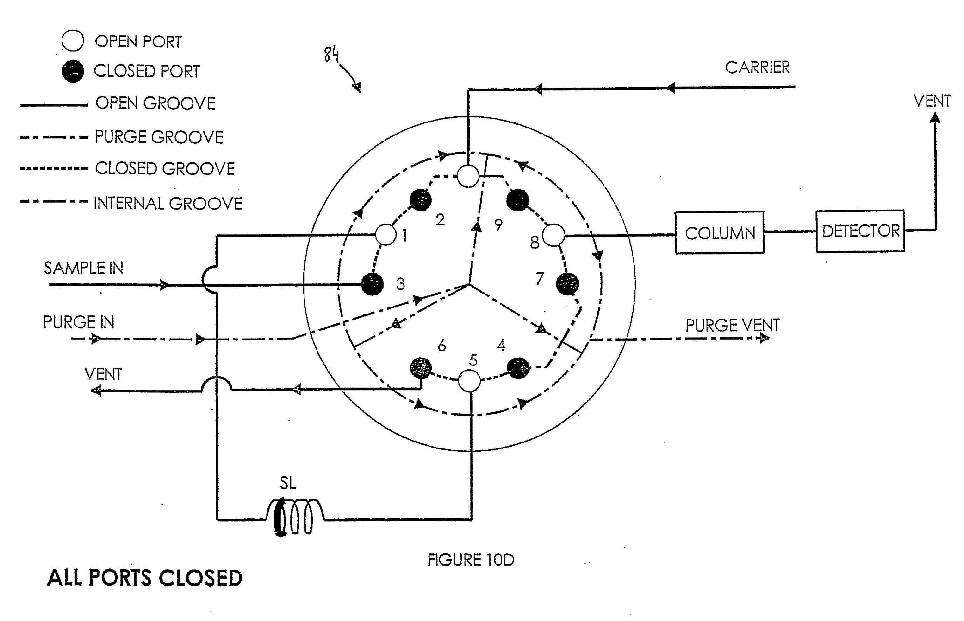

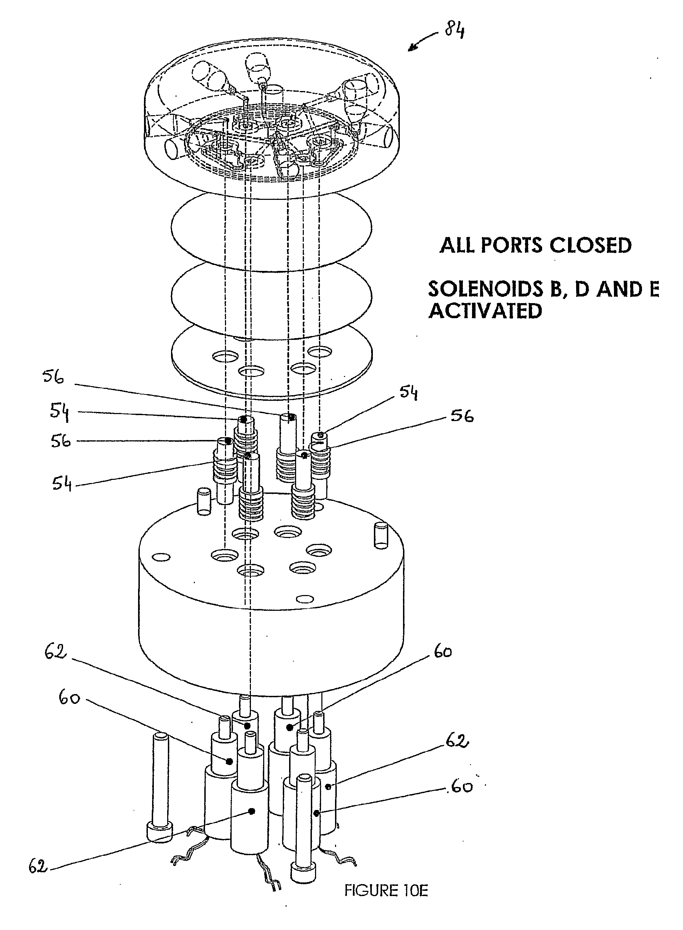

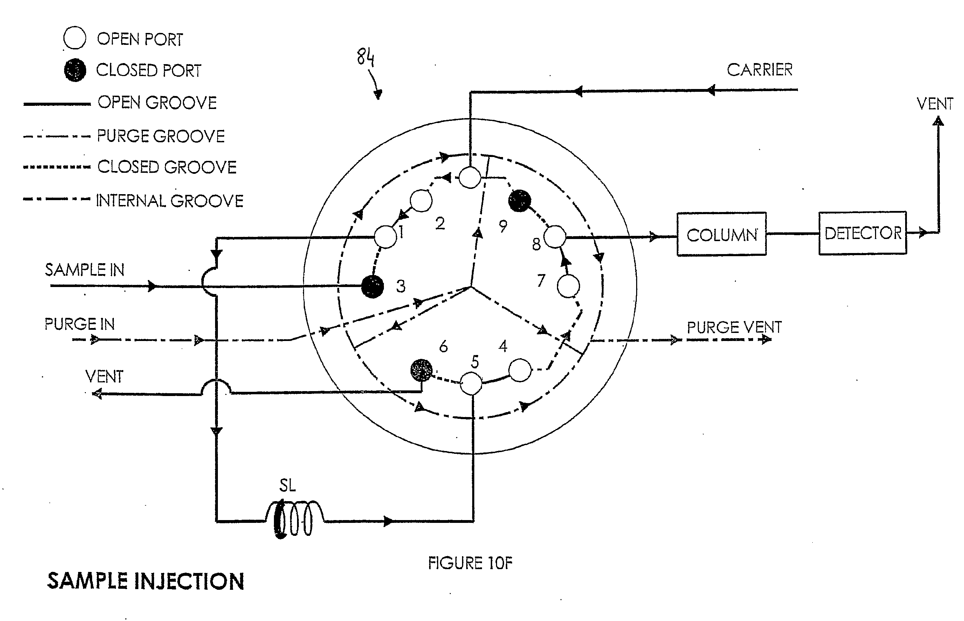

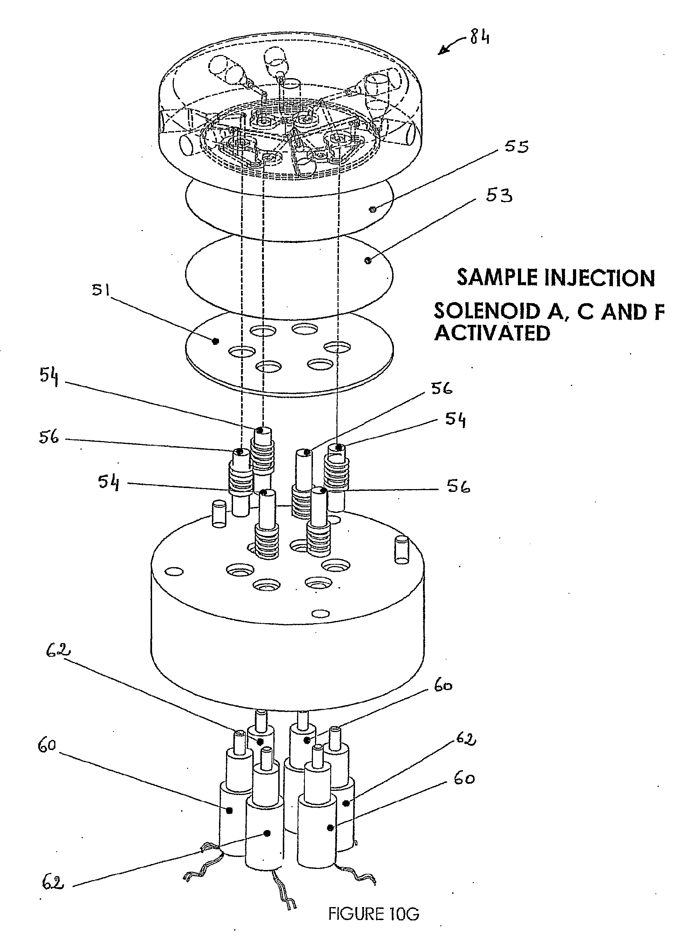

Figures 10A to 10G illustrate the valve **84** of the present invention in different positions. Figures 10B and 10C show the sampling mode position, Figures 10D and 10E show the intermediate position wherein all ports **32, 34** are closed, while Figures 10F and 10G show the sample injection position. So, one can see that the three elementary switching cells **22** are simply embedded in the same substrate. As described above, in this illustrated preferred embodiment, there is an outer annular recess **88** surrounding all of the cells **22,** and separation recesses **92** for isolating each of the cells **22.** Thus, a purging fluid can advantageously be introduced into the fluid inlet **72,** preferably extending in the inner recess **90,** where the separation recesses **92** join together. This purging fluid can thus flow through the separation recesses **92** between the cells **22,** and then to the outer annular recess **88** and then exit by the fluid outlet **74,** preferably extending therein. Of course, the fluid inlet **72** could extend in the outer recess **88** while the fluid outlet **74** could extend in the inner recess **90.** So any leak that may occur over the time from anyone of the cells **22** will reach the purge circulation line **68** first, avoiding contaminating the other cells. Indeed, with reference to Figure 10B, the valve **84** can advantageously be used in an analytical chromatographic system **126** to provide a system having improved characteristics. Such an analytical chromatographic system **126** is advantageously provided with a diaphragm-sealed valve **84** having a purge circulation line **68** as described above. The analytical system **126** is also advantageously provided with monitoring means **82** operatively connected to the fluid outlet **74** for monitoring a fluid passing therethrough. In a preferred embodiment, the monitoring means **82** have a purity detector for detecting contamination of said fluid. Preferably, the monitoring means **82** are adapted to monitor the fluid passing through the purge circulation line **68** continuously. Again, this feature is well explained in our previous US application. In this illustrated valve configuration, one of the switchable ports **32, 34** is preferably closed while the other switchable port **32** or **34** is opened when the valve is at rest or not actuated. Again, the springs **64, 66** associated to the plungers **54, 56** are advantageously particularly arranged to push down one plunger and move up the other one. Each of the three cells **22** is configured this way. It is an advantageous convenient way to provide all the switching cells **22** on the same substrate, since it eliminates tubing connections. The ports connected together are preferably linked by an internal conduct drilled in the substrate. It is also possible to use three elementary separate cells **22** and connect them together with tubing. The result would be the same and there would be no difference on performance.

The valve design provided by the present invention resolves another problem inherent to the design of the prior art valves. Indeed, in the prior art, when a valve is operated to inject a sample, the cycle is generally done in three steps: sampling, isolating (all ports closed) and finally the sample injection. In gas chromatography, most of the time the sample is at ambient or sub atmospheric pressure and the carrier is at much higher pressure. Since the sample is at low pressure, the sample volume of the sample loop is made bigger to have more sample, and then more impurities, in order to increase the sensitivity of the gas chromatographic system. Mostly, in the prior art, the sample loop is generally made of tubing having a diameter bigger than the tubing of the gas chromatographic carrier circuit. For example, it is not uncommon to have a sampling loop having an outer diameter of 1/8", while the carrier distribution network is made of tubing having an outer diameter of 1/16". So, when suddenly the sample volume is introduced into the carrier circuit, there is a system flow and pressure perturbation. When the system sensitivity is high, this perturbation generally generates a dramatic detector's baseline shift that interferes with the impurities to be measured, thereby reducing the overall system repeatability and sensitivity. The impact is even more dramatic in a system wherein a permeation tube or a dopant gas are added to the detector, since flow variation results in change of dilution ratio, thereby changing the level of dopant into the detector. Moreover, the pressure or flow variation can also change the separation column operating conditions. Indeed, since the sample loop must be pressurized before the flow comes back to its operating point, the column inlet pressure decreases and there is a reverse flow from the column. In gas solid chromatography, the column packing may eventually release some molecules that are normally trapped into the column. When the flow starts back, a part of these molecules will reach the detector, thereby generating a false peak or baseline shift.

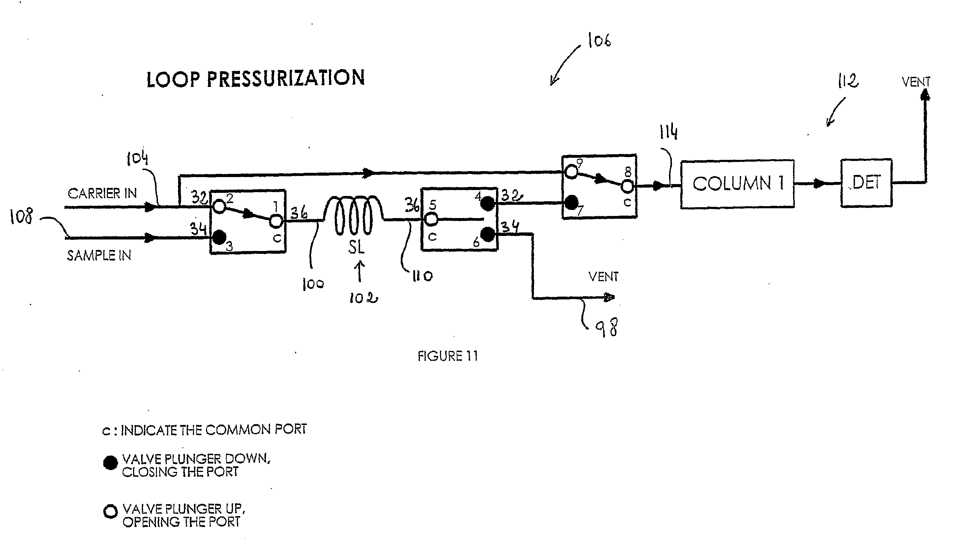

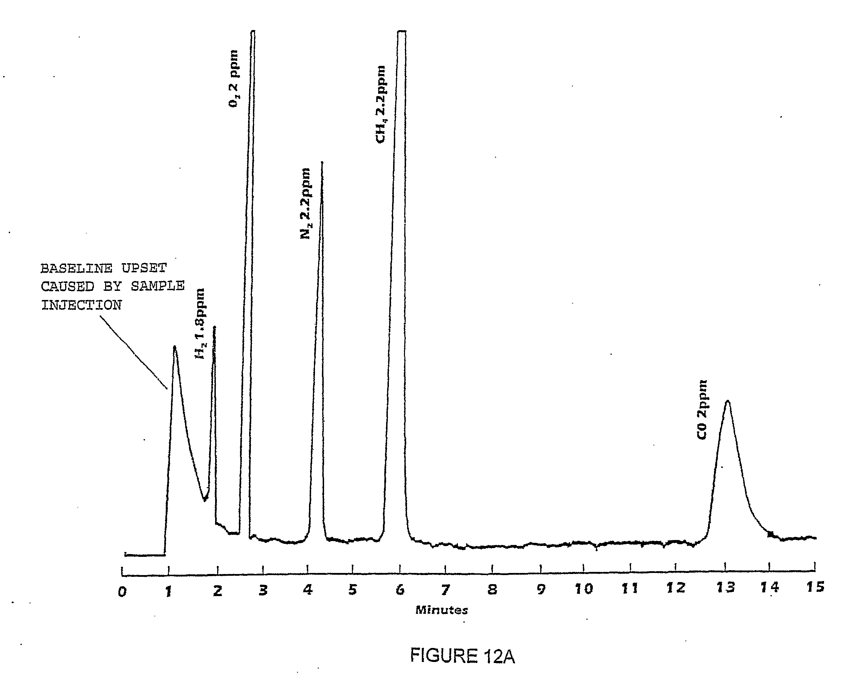

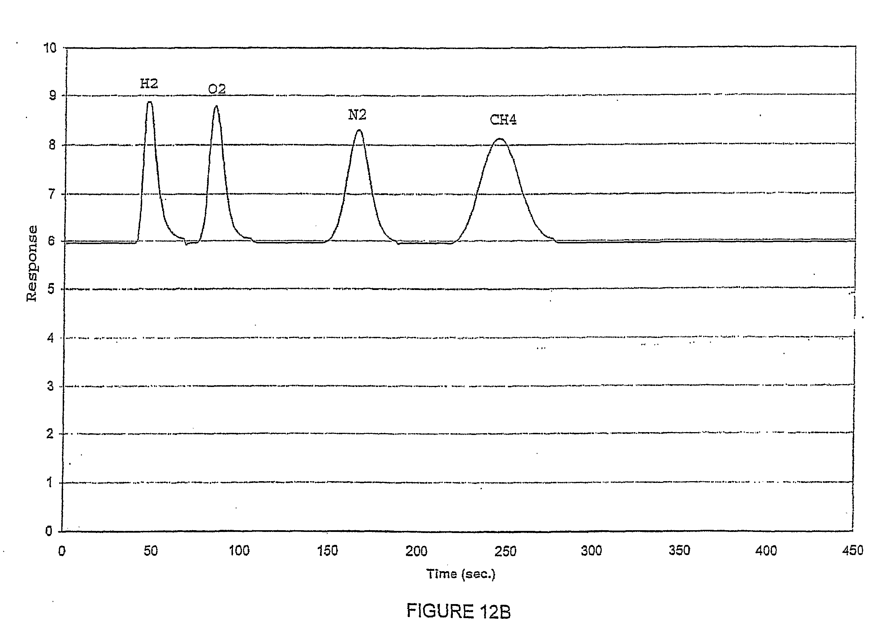

However, with the diaphragm sealed valve provided by the present invention, most of these prior art drawbacks can be overcame. Indeed, with the valve of the present invention, another step may be added to a conventional injection cycle. The cycle is then: sampling, sample loop isolation and pressurization, all ports closed and sample injection. The sample loop isolation and pressurization step is shown in Figure 11. In this step, the vent side **98** of the sampling loop **102** is closed by actuating the associated solenoid. The inlet **100** of the sampling loop **102** is then connected to the carrier inlet **104,** as shown by the valve flow path. In this position, the sampling loop **102** is pressurized at a pressure equal to the column head pressure. At this moment, the sampling loop **102** is put into the carrier circuit. There is no perturbation generated. Figure 12A shows a conventional baseline where a sample is injected with a conventional valve. One can see there is a strong upset. In Figure 12B, the conventional valve has been replaced with the valve of the present invention. One can see that no upset occurs, even when enlarging the baseline. This method has a beneficial impact on hardware used to regulate carrier flow and pressure since there is no more column head pressure variation. Thus, a simpler regulation method can be used instead of those of the prior art, thereby allowing to reduce the overall system cost and complexity.

Accordingly, still with reference to Figure 11, the present invention thus provides an improved analytical chromatographic method. This improved method comprises the steps of:
a) providing a fluid sampling system **106** comprising a diaphragm-sealed valve **84** provided with a plurality of independently actuated ports **32, 34** serially interconnected to each other. The fluid sampling system **106** further has a sample inlet **108,** a carrier inlet **104,** a sampling loop **102** having an inlet **100** and an outlet **110,** a sample vent line **98** and analytical means **112** provided with an inlet **114,** each being operatively interconnected to the valve **84** through a corresponding one of the ports;
b) providing fluid communication from the sample inlet **108** to the inlet **100** of the sampling loop **102** by actuating the corresponding ports **32, 34,** thereby providing a fluid sample in the sampling loop **102;**
c) closing the outlet **110** of the sampling loop **102** by actuating the corresponding port **32, 34** to isolate the sampling loop **102;**
d) providing fluid communication from the carrier inlet **104** to the inlet **100** of the sampling loop **102** by actuating the corresponding port **32, 34** to pressurize the sampling loop **102;**
e) preventing fluid communication from each of the ports **32, 34, 36** to the remaining ports by actuating the corresponding ports; and
f) providing fluid communication from the outlet **110** of the sampling loop **102** to the inlet **114** of the analytical means **112** by actuating the corresponding port, thereby injecting the sample in the analytical means **112.**

In the past, many have designed complex flow or pressure regulation subsystems in the attempt of reducing baseline upset at sample injection. For example, US Patents Nos. 4,976,750 and 5,952,556 illustrate such regulation subsystems. This goal is easily achieved with the present valve design because of the independent port actuation and positive sealing action making a leak tight system when in closed position. Moreover, with the present design, no dead volume effect occurs where part of sample can be trapped and slowly diffused back on injection and cause tailing peak.

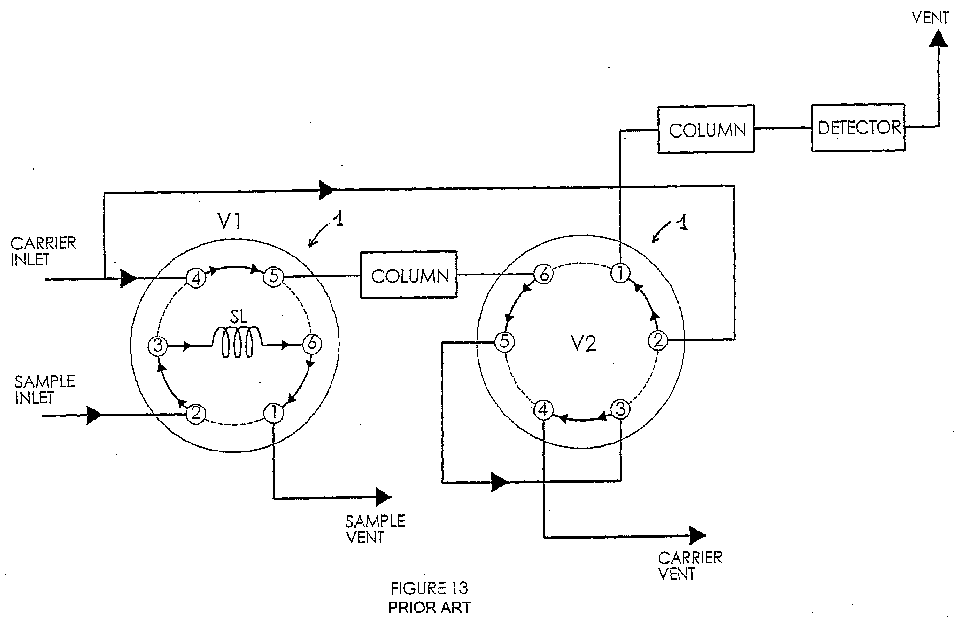

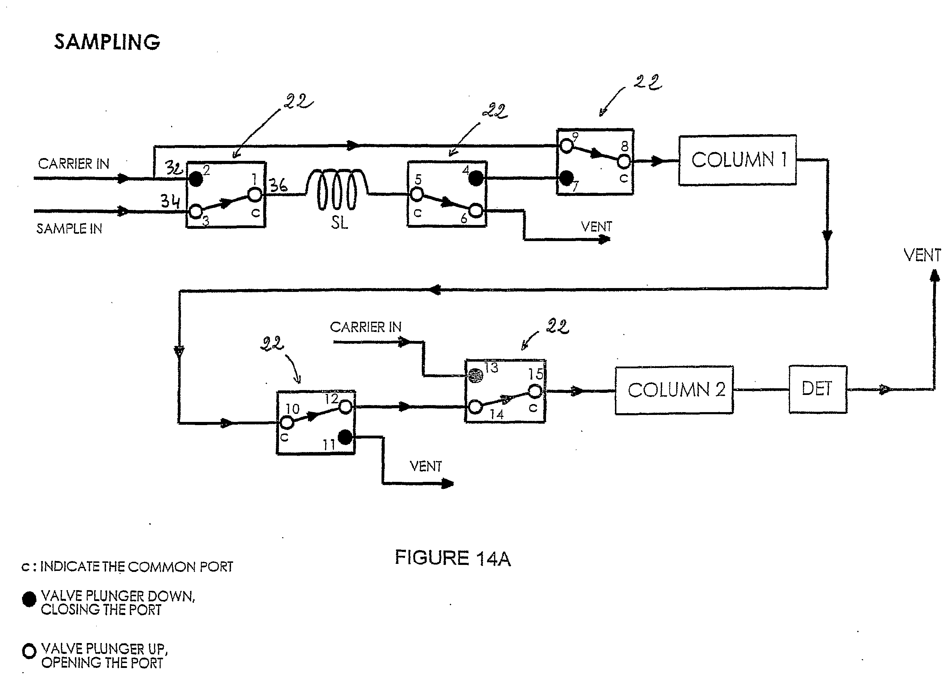

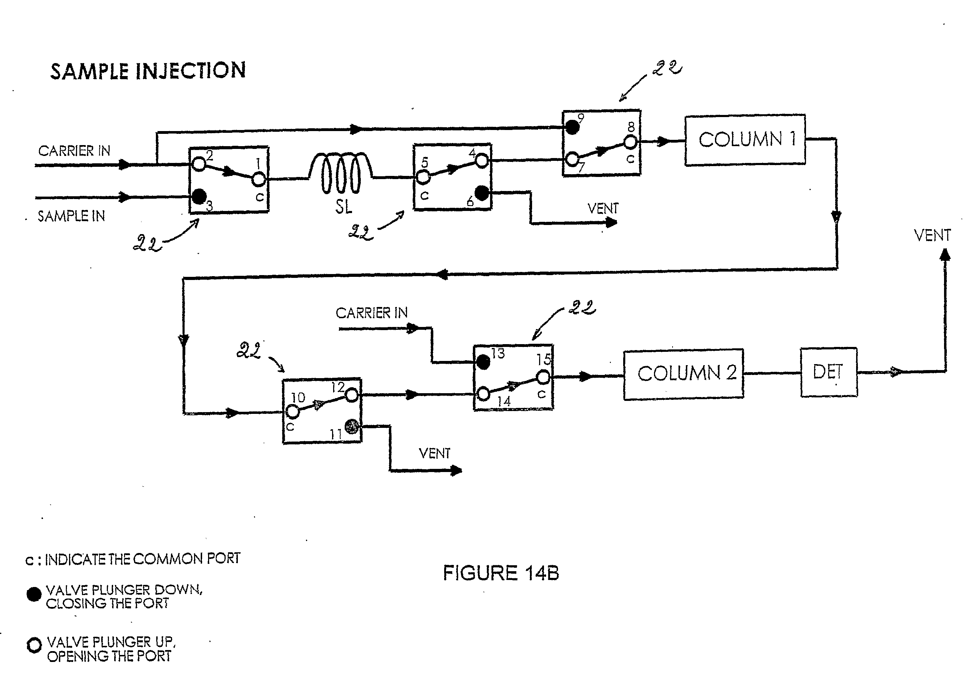

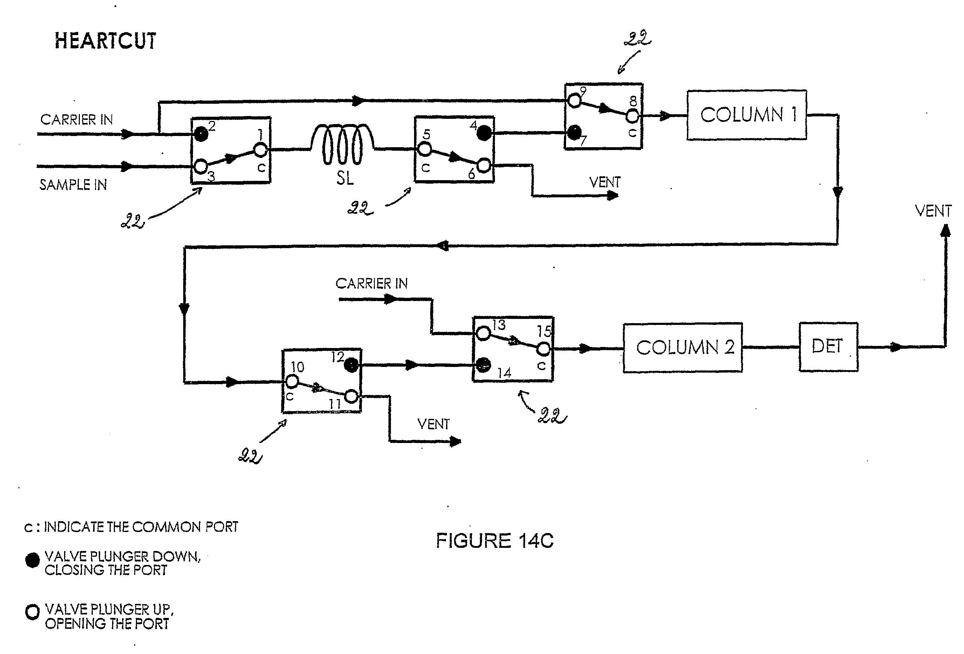

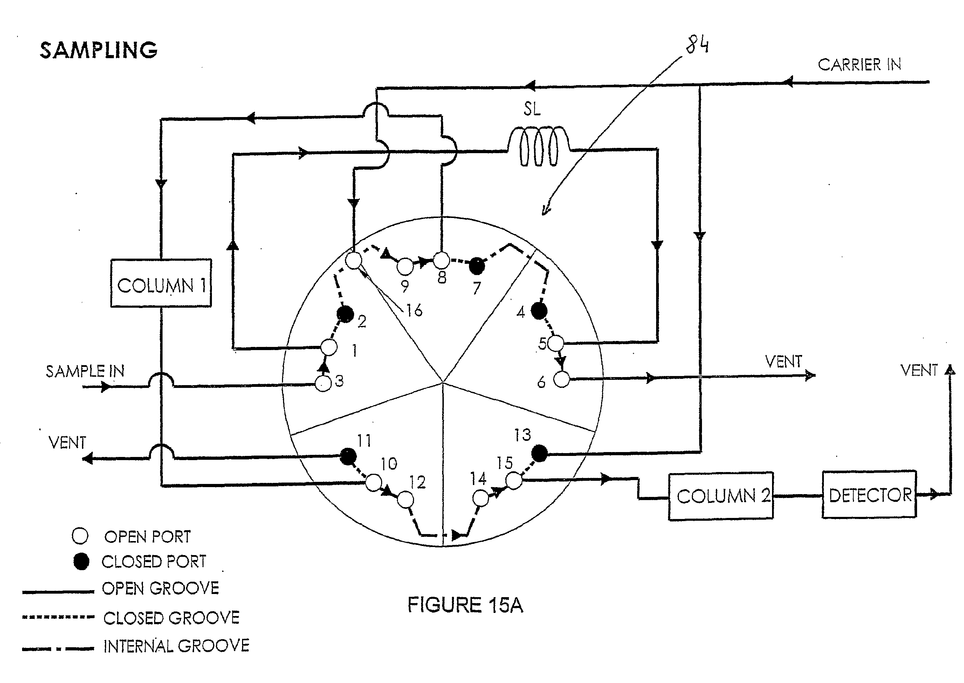

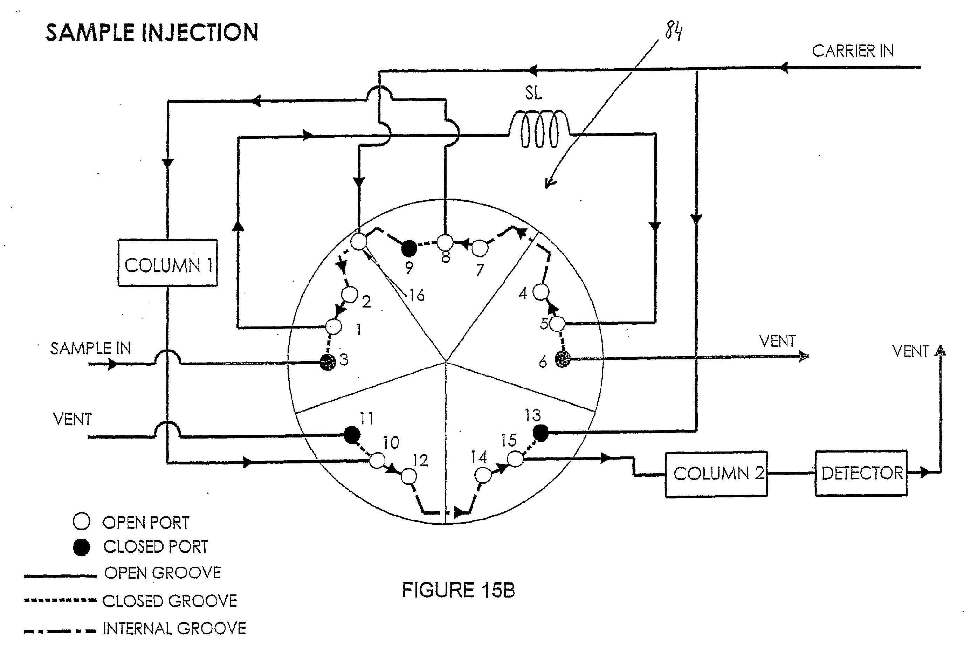

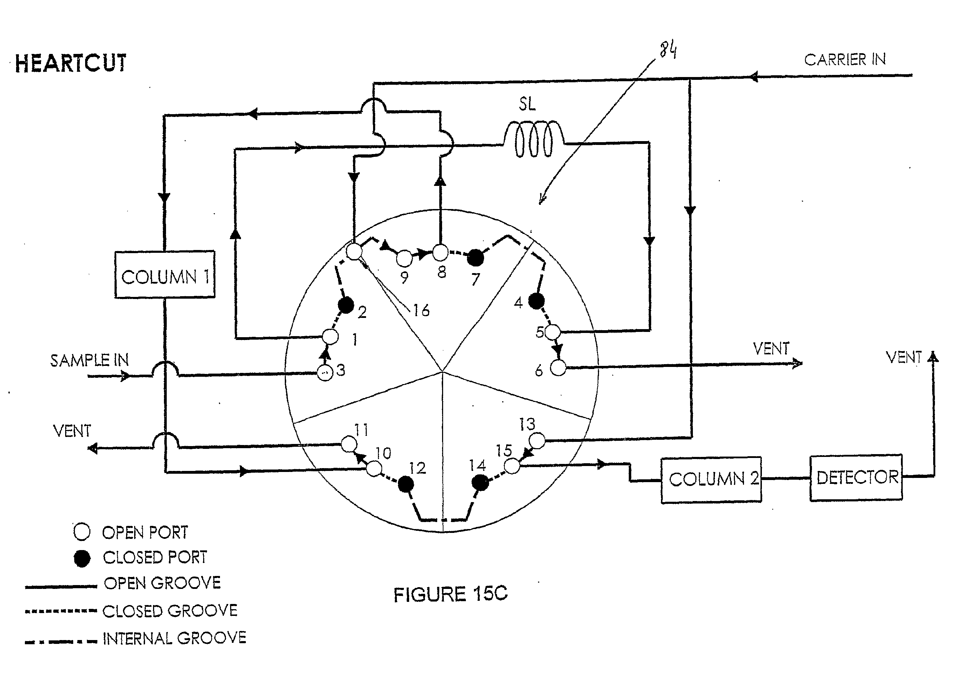

According to the present invention, the principle of the present valve could also be used in other typical columns, complex valves and detector configurations commonly used in the field. For example, common conventional configurations like heartcut, back flush, column selection, series-across the detector (SAD), series by-pass, trap selection, etc can be realized. So, the invention is not limited to sample loop injection. For example, a common application is the heartcut one as shown in Figure 13. This application can be done with a 10 port valve or two six port valves. The application shown in Figure 13 uses two six port valves of the prior art. In Figures 14A to 14C, this application, which is functionally equivalent to the one shown in Figure 13, is illustrated with a plurality of three way elementary cells **22** of the present invention, in the different valve positions. Figures 15A to 15C show another preferred embodiment of this application using the valve **84** of the present invention, in different valve positions. The extra switching cells **22** are added to the common substrate. The switching cell ports that are common together are internally connected by flow passage machined into the first body **24** of the valve **84,** thereby reducing the number of external fittings.

Another benefit of the present invention is the ease of designing complex system configurations. The fact of using only one switching cell **22** at a time allows to more easily design multiple columns, valves and detector combinations. The solution to system design problems is easier to resolve than in the past.

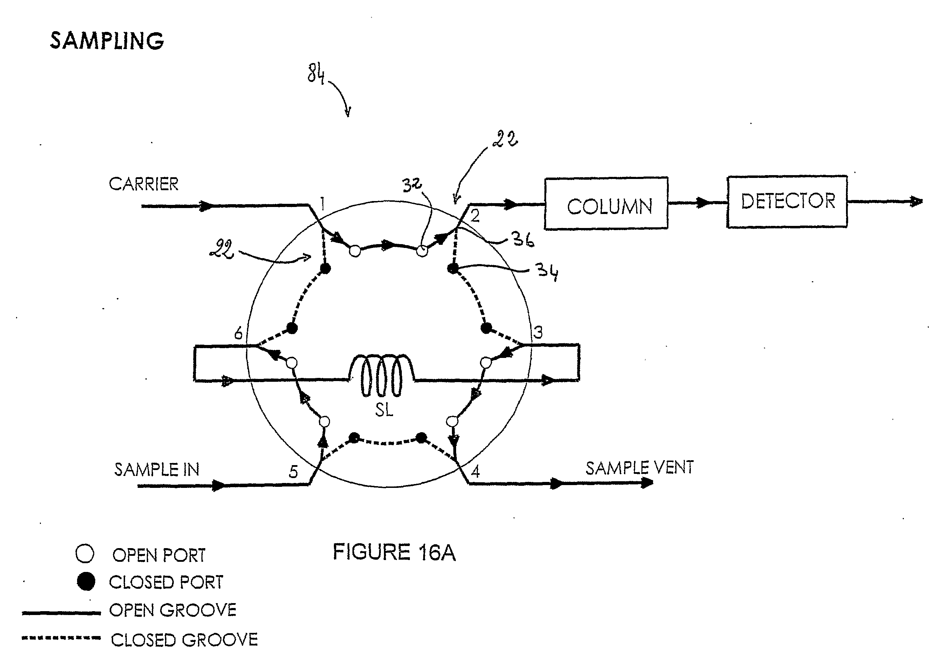

Thereinabove, there will be described a plurality of preferred embodiments of the present invention, each using a combination of at least one elementary cell **22** having independently controlled ports **32, 34.** For example, with reference to Figures 16A to 16D, as a first preferred variation, a real flow path equivalent like typical gas chromatographic six port valve could be realized. In this configuration, there still is sample flowing through the valve **84** on injection position. In this application, six elementary cells **22** are used, preferably extending on a circle **96** concentrical with the first interface **26.** One of the controlled ports **32, 34** of a cell **22** is closed while the other is opened when the valve is not actuated. The chromatographic community is more familiar with this preferred valve embodiment and the resulting flow path. This preferred embodiment however introduces some dead volume. The fluid does not sweep the connecting conduits tied to common ports **36** when the corresponding ports are closed. Nevertheless, tests have been performed and show that this dead volume does not change the analytical results because of its small size. This assumption is correct for gaseous applications but may not be correct if the fluid is a liquid.

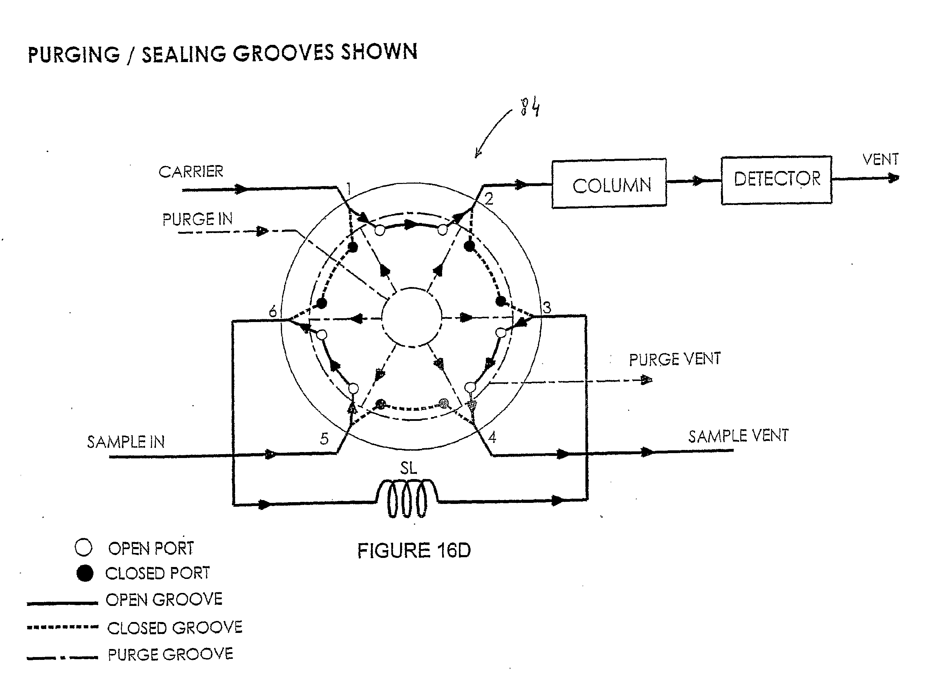

Figures 16A to 16C show different valve positions of a conventional injection cycle. It is obvious for people involved in the art that any number of elementary cells **22** can be embedded on the same substrate, which is preferably circularly or rectangularly shaped to provide the appropriate number of ports required for a particular application. It is also evident that even a four port valve could be realized. Presently, there are no four port gas chromatographic diaphragm valves available on the market. There are only four port rotary gas chromatographic valves. It is also evident that the valves may also be installed in a system that monitors the quality of the purging gas flowing in the circulation line **68** for diagnostic purposes, as shown in Figure 16D and as already explained. Besides, in the case the valve is a rotary one, when the rotor is actuated, the purging circulation line in the rotor quickly passes over the stator's port. It doesn't change or hurt the analytical result but it requires time synchronization of the purity detector used to measure the quality of the purging gas for valve diagnostic. With the valve **84** of the present invention, when the ports **32, 34** are actuated, the purging circulation line **68** is never in contact with the fluid carrier or sample fluid. So, no synchronization of the purity detector is required and continuous measurements can be done, resulting in a continuous monitoring of valve performance. This characteristic is an important one of the present invention since it can not be obtained with the valves of the prior art.

As described above, in a preferred embodiment, the actuating mechanism is advantageously provided with a plurality of electrical solenoids, each actuating a corresponding one of the plurality of plungers. It should however be understood that any other convenient means to actuate the plungers could also be envisaged. For example, if the fluid pressure is relatively low, like in most of gaseous applications, simple solenoid valves could advantageously be used. For a medium pressure range, the actuating mechanism could advantageously be pneumatic. For high pressure range, a mechanical actuation could be envisaged.

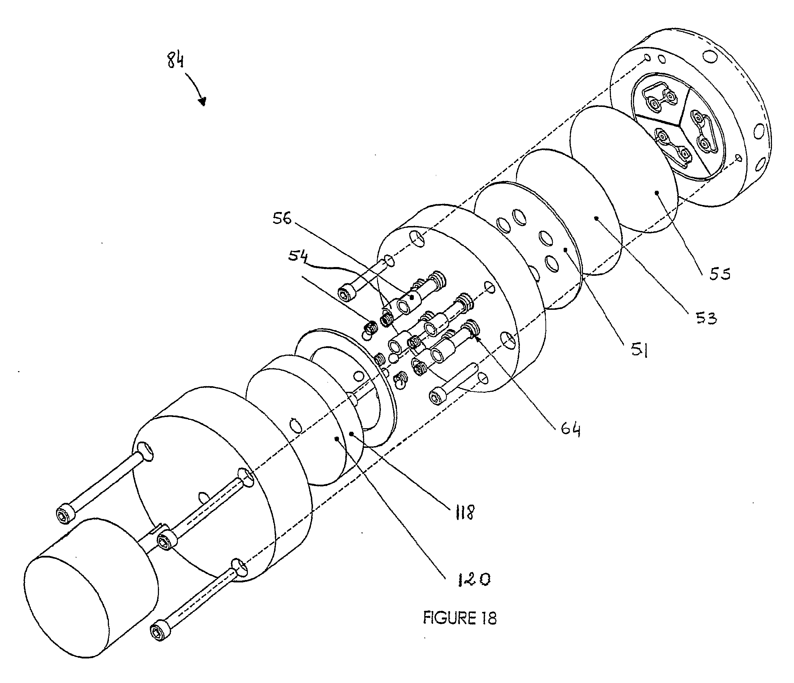

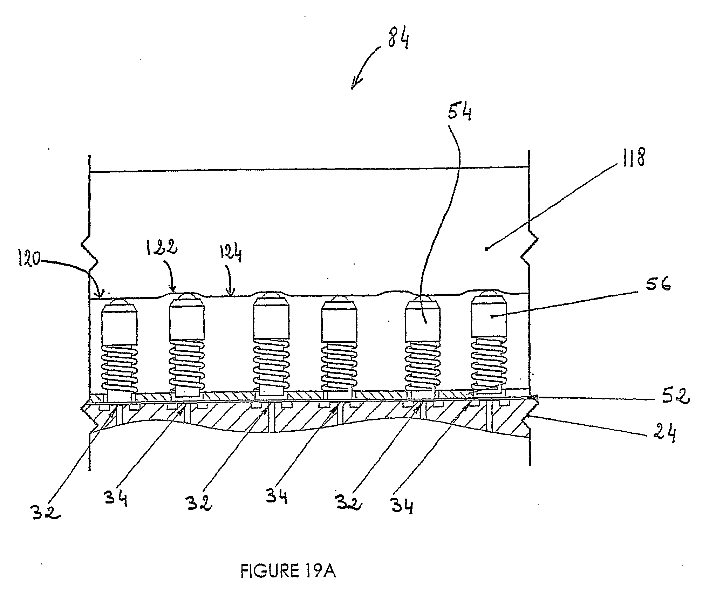

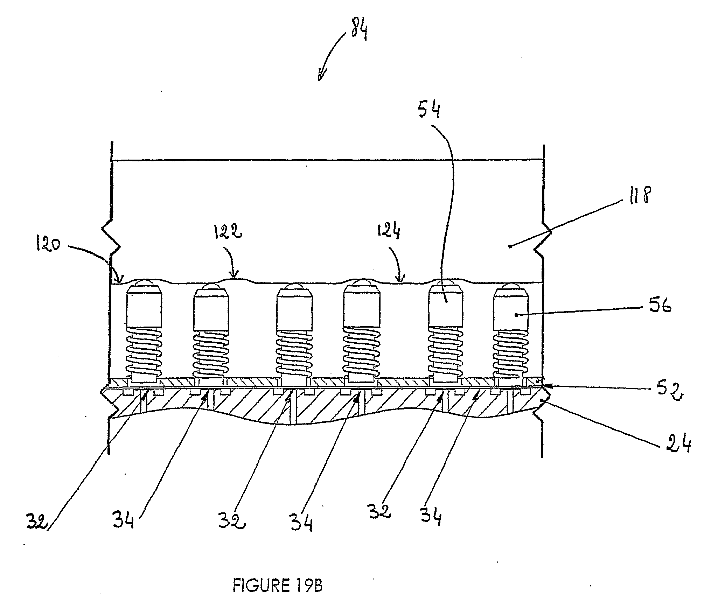

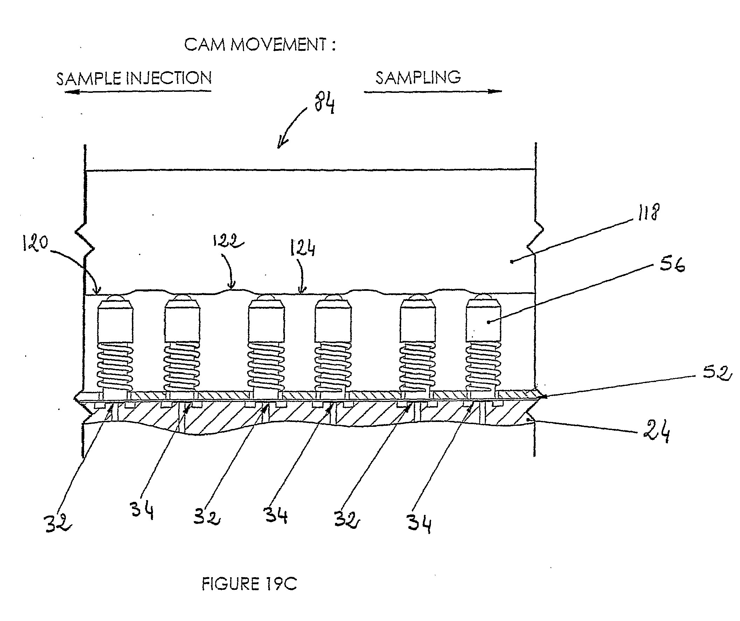

Accordingly, with reference to Figures 18 to 19C, in a further preferred embodiment of the valve **84,** the actuating means can advantageously be based on a rotary cam **118** dedicated to synchronize the actuation of each of the plungers **54, 56.** In this case, the actuating means is advantageously provided with a rotary cam **118** having a cam interface **120** in contact relationship with each of the plungers **54, 56.** The cam interface **120** has a plurality of recessed portions **122** and a plurality of protuberant portions **124** particularly arranged and slidable against each of the plungers **54, 56** for actuating each of the plungers in a respective one of the closed and open positions thereof. Such actuating means has been proved to be very efficient.

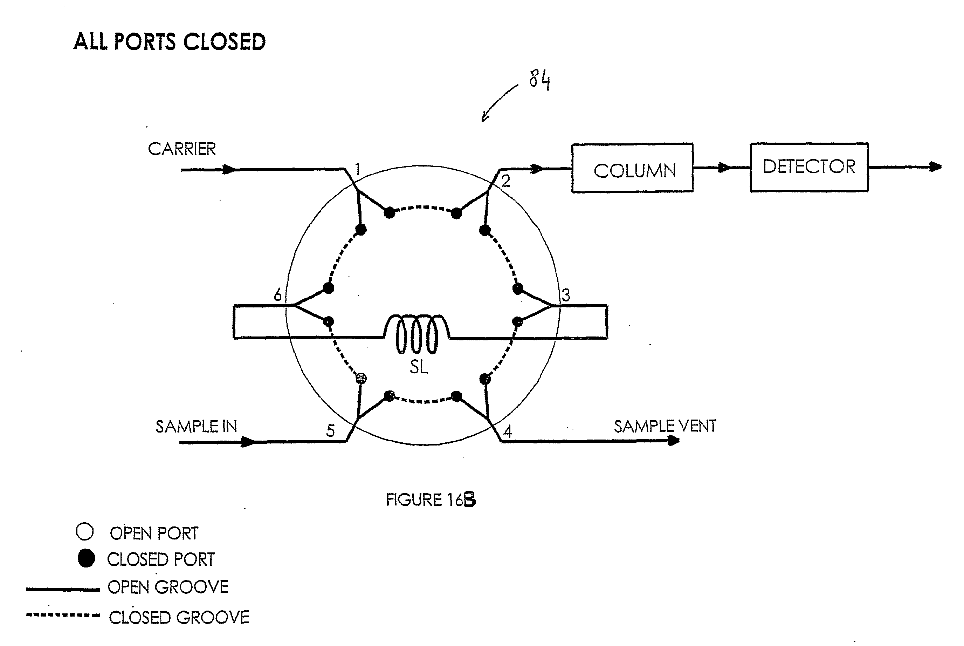

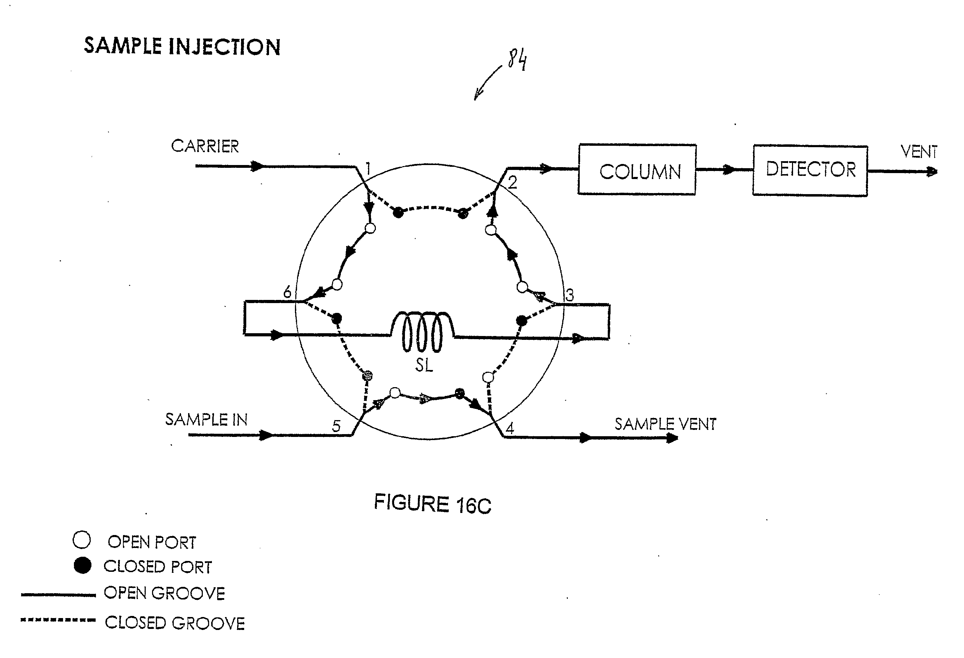

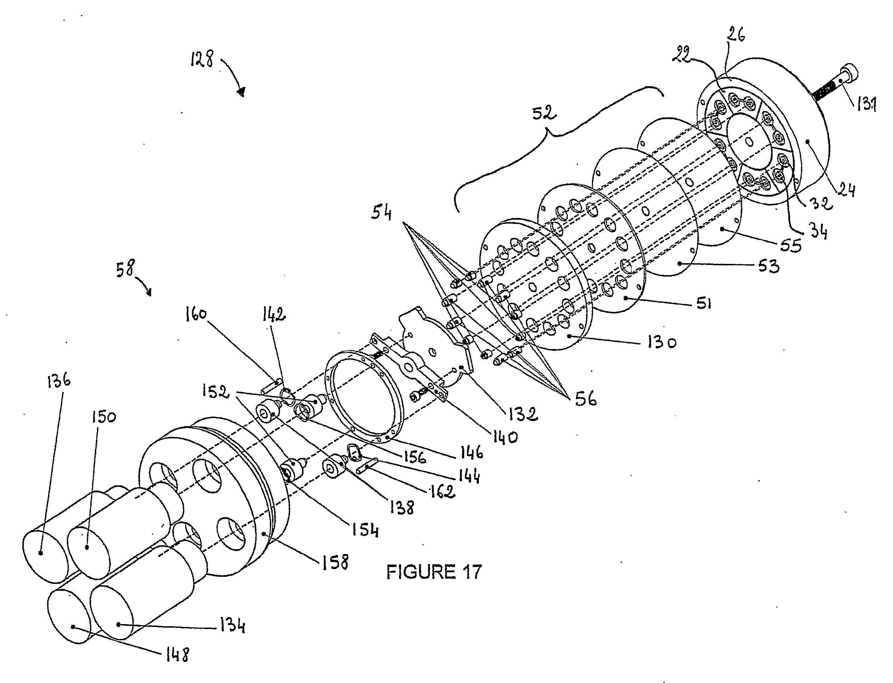

FIGURE 17 illustrates another preferred embodiment. This valve **128** is provided with six elementary switching cells **22** for allowing the flow path shown in FIGURE 16A. The seal member **52** advantageously has a sealing plate **130** attached to the first body **24** for holding the Teflon spacer **51,** the metallic diaphragm **53** and the polymer diaphragm **55** therebetween. Indeed, the sealing is performed when the sealing plate **130** is screwed on the first body **24** with screw **131.** Of course any other convenient attaching means could also be envisaged. When the sealing plate **130** is screwed, it compresses the Teflon spacer **51,** the stainless diaphragm **53** and the polymer diaphragm **55** against the first interface **26** of the first body **24.** The compression force creates the sealing. As previously described, the port closing is achieved by pushing a plunger on the metallic diaphragm **53,** preferably a stainless diaphragm, which compresses the polymer diaphragm **55** on the valve body's port. To make this valve properly working, it must be actuated with two independent actuators. These actuators are particularly designed to put the valve **128** in three different positions such as the sampling mode position (as illustrated in Figure 16A), all ports closed or the intermediate position (as illustrated in Figure 16B), and the sample injection position (as illustrated in Figure 16C). Moreover, the valve **128** may advantageously be provided with a specially designed electronic circuit (not shown) for controlling the actuators. Thus, it can be possible to determine precisely the intermediate position's duration. This way, the valve operator will always be sure that all valve's port will never be opened at the same time to prevent unwanted communication between some ports. In this preferred embodiment, a particularly advantageous arrangement for actuating each of the ports **32, 34** is used. Indeed, each of the first plungers **54** has a predetermined first length while each of the second plungers **56** has a predetermined second length longer than the first length. The actuating means **58** is provided with a first independent actuator for actuating each of the first plungers **54** and a second independent actuator for actuating each of the second plungers **56** respectively. The first actuator has a short plungers push plate **132** adapted for pressing down each of the first plungers **54.** The first actuator is further provided with first and second solenoids **134, 136** particularly arranged for acting against the short plungers push plate **132** to actuate each of the first plungers **54.** In a preferred embodiment, the solenoids **134, 136** advantageously push on couplings **138,** which push on a link **140,** which sits on the short plungers push plate **132.** The short plunger push plate **132** is pushing on short plungers **54.** The ports controlled with this first actuator are normally opened. This position is insured by the wave springs **142** and **144.** The second actuator is provided with a long plungers push element **146** coaxial to the short plungers push plate **132** and adapted for pressing down each of the second plungers **56.** Preferably, the long plungers push element **146** is ring shaped. The second actuator further has first and second solenoids **148, 150** particularly arranged for acting against the long plungers push element **146** to actuate each of the second plungers **56.** Indeed, the solenoids **148, 150** push on couplings **152** which are able to act on the long plungers pushing element **146.** The pushing ring **146** pushes on the long plungers **56.** The ports controlled with this second actuator are normally closed. This position is insured by the wave springs **154** and **156.** Preferably, each of the solenoids **134, 136, 148, 150** is fixed on a solenoid support **158.** Also preferably, the overall alignment of the valve is insured by dowel pins **160** and **162.**

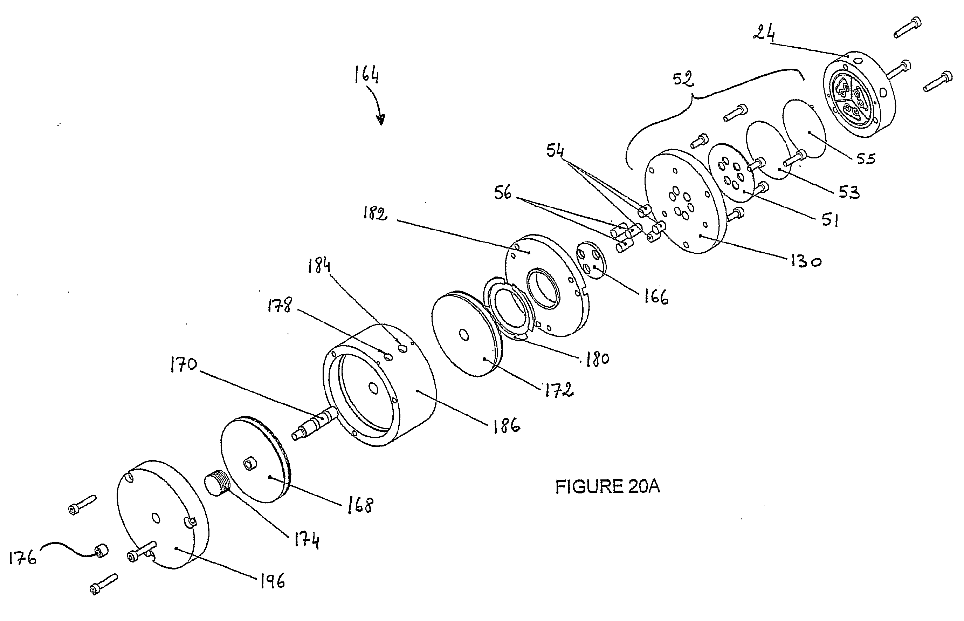

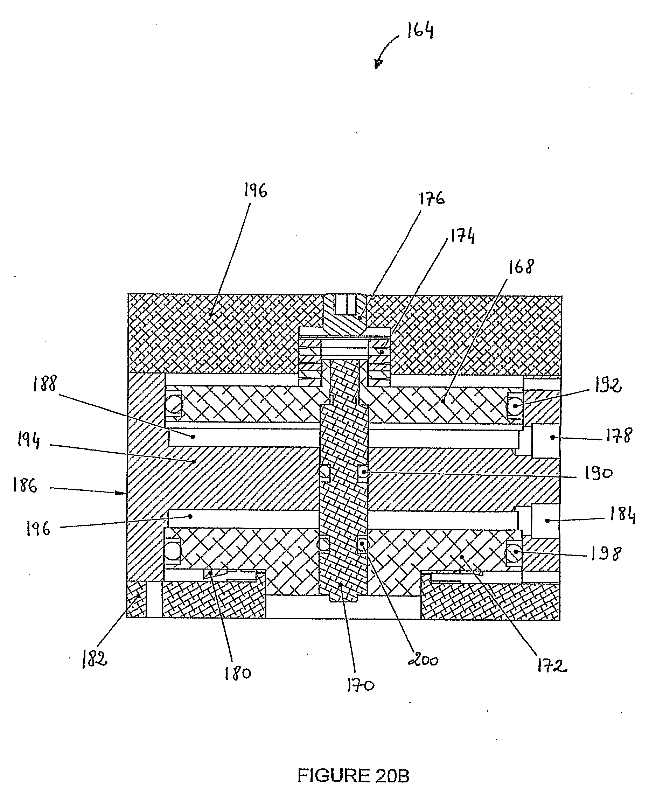

Figures 20A and 20B illustrate a valve 164 according to another preferred embodiment of the present invention. The first body **24** of this valve **164** is the same as the one described with reference to Figures 10A to 10G. The actuating means **58** is particularly designed to put the valve in three different positions such as the sampling mode position (as illustrated in Figure 10B), all ports closed or the intermediate position (as illustrated in Figure 10D), and the sample injection position (as illustrated in Figure 10F). This valve **164** is actuated with concentric actuators, preferably pneumatic actuators. To make this valve properly working, it must be actuated with two independent actuators. Moreover, the valve **164** may advantageously be provided with a specially designed electronic circuit (not shown) for controlling the actuators. Thus, it can be possible to determine precisely the intermediate position's duration. This way, the valve operator will always be sure that all valve's port will never be opened at the same time to prevent unwanted communication between some ports. In this preferred embodiment, a particularly advantageous arrangement for actuating each of the ports **32, 34** is used. Indeed, each of the first plungers **54** has a predetermined first length while each of the second plungers **56** has a predetermined second length longer than the first length. The actuating means **58** has a first concentric actuator for actuating each of the first plungers **54** and a second concentric actuator for actuating each of the second plungers **56.** Preferably, the first and second concentric actuators are pneumatic. The first actuator is provided with a short plungers push plate **166** for pressing down each of the first plungers **54.** The first actuator further has an upper piston **168** and a shaft **170** particularly arranged for acting against the push plate **166** to actuate each of the first plungers **54.** The second actuator has a lower piston **172** extending around the shaft **170** for pressing down each of the second plungers **56.** The port closing pattern is the same as the one described with reference to Figure 10B. The second plungers **56,** which are the long plungers, are used to commute the ports numbered 3, 6 and 9 in Figure 10B. The first plungers **54,** which are the short plungers, are used to commute the ports numbered 2, 4 and 7. To prevent any problem with a lack of actuation gas pressure, the ports 2, 4 and 7 are preferably normally closed. This is made possible by the use of a Belleville washer stack **174** and a compression set screw **176.** The Belleville washer stack **174** sits on the upper piston **168** on which the upper piston shaft **170** is screwed. This shaft **170** pushes the short plunger push plate **166** when the upper piston **168** is not actuated. The upper piston **168** is actuated when air is supplied to the upper cylinder port **178.** When the upper piston **168** is actuated, the ports 2, 4 and 7 are opened. The second actuator, which is provided with the lower piston **172,** also preferably has a finger spring **180.** This second actuator makes ports 3, 6, and 9 normally opened. The finger spring **180** ensures that the lower piston **172** doesn't act on the long plungers **56** when the lower piston **172** is not actuated. The finger spring **180** sit on the actuator's lower cap **182,** which is fixed on the sealing plate **130.** When pressurized gas is supplied through the lower cylinder port **184,** it pushes the lower piston **172** down which, by the way, acts on the long plungers **56** to close ports 3, 6 and 9. The actuation air is preferably controlled with a specially designed electronic circuit and solenoid valves (not shown). Figure 20B shows a sectional view of the pneumatic actuator assembly and clearly illustrates how the upper and lower pistons **168, 172** are assembled in a cylinder **186.** In this preferred embodiment, to obtain two independent actuators, two different air chambers must be included in the actuator. The upper piston air chamber **188** is sealed with O-Ring **190** and **192,** upper piston **168** and the cylinder middle section **194.** The actuation air is supplied through port **178.** The normally closed position of this actuator is insured by the Belleville washer stack **174** and the compression set screw **176** screwed in the actuator's upper cap **196.** The lower piston air chamber **196** is sealed with O-Ring **198** and **200,** lower piston **172** and the cylinder middle section **194.** The actuation air is supplied through port **184.** The normally open position is insured with finger spring **180,** which sits on the actuator lower cap **182.**

Although preferred embodiments of the present invention have been described in detail herein and illustrated in the accompanying drawings, it is to be understood that the invention is not limited to these precise embodiments and that various changes and modifications may be effected therein without departing from the scope or spirit of the present invention.

## Claims

1. A diaphragm-sealed valve (22, 84, 128, 164) comprising:
a first body (24) having a first interface (26) provided with a recessed fluid communication channel (28) extending therein and comprising a loop-shaped portion, said first body (24) having a first, a second and a common fluid port (32, 34, 36), each of said ports (32, 34, 36) opening into said recessed fluid communication channel (28) for interconnecting each of said ports (32, 34, 36) together through said fluid communication channel (28);
a second body (44) interconnected with said first body (24) and having a second interface (46) facing said first interface (26), said second body (44) having a first and a second passage (48, 50), each of said passages (48, 50) facing one of said first and second ports (32, 34) respectively;
a seal member (52) compressibly positioned between said first and second interfaces (26, 46) , said seal member (52) having a shape adapted to cover said first and second ports (32, 34);
a first and a second plunger (54, 56), each being respectively slidably disposed in one of said passages (48, 50) of said second body (44), each of said plungers (54, 56) having a closed position and an open position; and
actuating means (58) for actuating each of said plungers (54, 56) between said closed and open positions thereof;
characteristed in that:
each of said first and second ports (32, 34) is provided with a seat (42) disposed so as to allow fluid communication therearound within said communication channel (28); and
in the closed position, each of said plungers (54, 56) presses down the seal member (52) against the seat (42) of the corresponding port (32, 34) for closing said corresponding port (32, 34), and in the open position, each of said plungers (54, 56)extends away from the seat (42) of the corresponding port (32, 34) for allowing a fluid communication between the corresponding port (32, 34) and said channel (28).

2. The diaphragm-sealed valve (22, 84, 128, 164) according to claim 1, wherein said actuating means independently actuate each of said plungers (54, 56).

3. The diaphragm-sealed valve (22, 84, 128, 164) according to claim 1, wherein each of said first and second interfaces (26, 46) has a planar shape.

4. The diaphragm-sealed valve (22, 84, 128, 164) according to claim 1, wherein the seat (42) of each of said first and second ports (32, 34) comprises a raised portion.

5. The diaphragm-sealed valve (22, 84, 128, 164) according to claim 1, wherein the shape of the seal member (52) is adapted to cover said fluid communication channel (28).

6. The diaphragm-sealed valve (22, 84, 128, 164) according to claim 1, wherein said seal member (52) comprises a polymer disc (55).

7. The diaphragm-sealed valve (22, 84, 128, 164) according to claim 1, wherein said seal member comprises a Teflon™ spacer (51), a metallic diaphragm (53) and a polymer diaphragm (55), each being arranged in a stacked relationship, said polymer diaphragm (55) being pressable against the seat (42) of each of the first and second ports (32, 34).

8. The diaphragm-sealed valve (128) according to claim 8, wherein said seal member (52) further comprises a sealing plate (130) attached to the first body (24) for holding said Teflon™ spacer (51), said metallic diaphragm (53) and said polymer diaphragm (55) therebetween.

9. The diaphragm-sealed valve (22, 84, 128, 164) according to claim 1, wherein each of said plungers (54, 56) is attached to said seal member (52).

10. The diaphragm-sealed valve (22, 84, 128, 164) according to claim 1, wherein said actuating means (58) comprise a first and a second solenoid (60, 62), each respectively actuating one of said plungers (54, 56).

11. The diaphragm-sealed valve (22, 84, 128, 164) according to claim 10, wherein said actuating means (58) further comprise first and second resilient means (64, 66), each being respectively mounted on a corresponding plunger (54, 56) for biasing said corresponding plunger (54, 56).

12. The diaphragm-sealed valve (22, 84, 128, 164) according to claim 1, wherein each of said plungers (54, 56) has a predetermined resting position providing a corresponding one of said closed and open positions.

13. The diaphragm-sealed valve (22, 84, 128, 164) according to claim 1, wherein said first plunger (54) is normally in said open position while said second plunger (56) is normally in said closed position.

14. The diaphragm-sealed valve (22, 84, 128, 164) according to claim 1, wherein the valve further comprises a purge circulation line (68) comprising:
an annular recess (70) extending in said first interface (26) and surrounding said fluid communication channel (28); and
a fluid inlet (72) and a fluid outlet (74), each having an opening lying in said annular recess (70) for providing a continuous fluid flow in said annular recess (70).

15. An analytical chromatographic system (80, 126) comprising :
a diaphragm-sealed valve (22, 84, 128, 164) as defined in claim 14; and
monitoring means (82) operatively connected to the fluid outlet (74) for monitoring a fluid passing therethrough.

16. The analytical chromatographic system (80, 126) according to claim 15, wherein said monitoring means (82) comprise a purity detector for detecting contamination of said fluid.

17. The analytical chromatographic system (80, 126) according to claim 15, wherein said monitoring means (82) are adapted to monitor said fluid continuously.

18. The diaphragm-sealed valve (84, 128, 164) according to claim 1, wherein:
the first interface (26) of the first body (24) is provided with a plurality of distinct recessed fluid communication channels (28) extending therein, said first body (24) having a plurality of port sets, each comprising a first, a second and a common fluid port (32, 34, 36), each port (32, 34, 36) of a corresponding set opening into a corresponding one of said recessed fluid communication channels (28) respectively for interconnecting each port (32, 34, 36) of said corresponding set together through said corresponding fluid communication channel (28) respectively, each of said first and second ports of (32, 34) each of said sets being provided with a seat (42) disposed so as to allow fluid communication therearound within said corresponding communication channel (28);
the second body (44) has a plurality of passage pairs, each comprising a first and a second passage (48, 50), each passage (48, 50) of a corresponding pair respectively facing one of said first and second ports (32, 34) of a corresponding set; and
said diaphragm-sealed valve (84, 128, 164) comprises a plurality of pairs of first and second plungers (54, 56), each plunger (54, 56) of a corresponding pair being respectively slidably disposed in one of said passages (48, 50) of a corresponding pair, each of said plungers (54, 56) having a closed position wherein the corresponding plunger (48, 50) presses down the seal member (52) against the seat (42) of the corresponding port (32, 34) for closing said corresponding port (32, 34), and an open position wherein said plunger (48, 50) extends away from the seat (42) of the corresponding port for (32, 34) allowing a fluid communication between the corresponding port (32, 34) and a corresponding channel (28), the actuating means (58) actuating each of said plungers (48, 50) between said closed and open positions thereof.

19. The diaphragm-sealed valve (84, 128, 164) according to claim 18, wherein the valve further comprises a purge circulation line (68) comprising:
a looped recessed fluid circuit (86) extending in said first interface (26), said looped fluid circuit (86) comprising an outer annular recess (88) and an inner recess (90), each extending in said first interface (26), said fluid circuit (86) further comprising a plurality of separation recesses (92) radially extending in said first interface (26), each of said separation recesses (92) being connected to each of said inner and outer recesses (88, 90) for defining a plurality of first interface portions (94) isolated from each other, each of said first interface portions (94) enclosing one of said fluid communication channels (28); and
a fluid inlet (72) and a fluid outlet (74), each having an opening lying at said first interface (26), each of said inlet (72) and outlet (74) being in continuous fluid communication with a respective one of said inner and outer recesses (88, 90) for providing a continuous fluid flow in said looped recessed fluid circuit (86).

20. The diaphragm-sealed valve (22, 84, 128, 164) according to claim 18, wherein each of said first and second ports (32, 34) are circularly arranged in a port circle (96) concentrical with said first interface (26).

21. The diaphragm-sealed valve(84, 128, 164) according to claim 18, wherein said actuating means (58) independently actuate each of said plungers (54, 56).

22. The diaphragm-sealed valve (84, 128, 164) according to claim 18, wherein said actuating means (58) comprise a plurality of pairs of first and second solenoids (60, 62), each solenoid (60, 62) of a corresponding pair respectively actuating a corresponding one plunger (54, 56) of a corresponding pair.

23. The diaphragm-sealed valve (84, 128, 164) according to claim 18, wherein said actuating means comprise a rotary cam (118) having a cam interface (120) in contact relationship with each of said plungers (54, 56), said cam interface (120) comprising a plurality of recessed portions (122) and a plurality of protuberant portions (124) particularly arranged and slidable against each of said plungers (54, 56) for actuating each of said plungers (54, 56) in a respective one of said closed and open positions thereof.

24. The diaphragm-sealed valve (164) according to claim 18, wherein each of said first plungers (54)has a predetermined first length, each of said second plungers (56) having a predetermined second length longer than said first length, said actuating means (58) comprising a first concentric actuator for actuating each of said first plungers and a second concentric actuator for actuating each of said second plungers, said first actuator comprising a short plungers push plate (166) for pressing down each of said first plungers (54), said first actuator further comprising an upper piston (168) and a shaft (170) particularly arranged for acting against the push plate to (166) actuate each of said first plungers (54), said second actuator comprising a lower piston (172) extending around said shaft (170) for pressing down each of said second plungers (56).

25. The diaphragm-sealed valve (128) according to claim 18, wherein each of said first plungers (54) has a predetermined first length, each of said second plungers (56) having a predetermined second length longer than said first length, said actuating means (58) comprising a first and a second independent actuator for actuating each of said first plungers (54) and each of said second plungers (56) respectively, said first actuator comprising a short plungers push plate (132) adapted for pressing down each of said first plungers(54), said first actuator further comprising first and second solenoids (134, 136) particularly arranged for acting against the short plungers push plate (132) to actuate each of said first plungers (54), said second actuator comprising a long plungers push element (146) coaxial to said short plungers push plate (132) and adapted for pressing down each of said second plungers (56), said second actuator further comprising first and second solenoids (148, 150) particularly arranged for acting against the long plungers push element (146) to actuate each of said second plungers (56).

26. An analytical chromatographic method comprising the steps of:
a) providing a fluid sampling system (106) comprising a diaphragm-sealed valve (84) provided with a plurality of ports (32, 34) serially interconnected to each other, said fluid sampling system (106) further comprising a sample inlet (108), a carrier inlet (104), a sampling loop (1 02)having an inlet (100) and an outlet (110), a sample vent line (98) and analytical means (112) provided with an inlet (114), each being operatively interconnected to said valve (84) through a corresponding one of said ports (32, 34);
b) providing fluid communication from said sample inlet (108) to the inlet (100) of the sampling loop (102) by actuating the corresponding ports (32, 34), thereby providing a fluid sample in said sampling loop (102);
e) preventing fluid communication from each of said ports (32, 34) to the remaining ports by actuating the corresponding ports; and
f) providing fluid communication from the outlet (110) of the sampling loop (102) to the inlet (114) of the analytical means (112) by actuating the corresponding port (32, 34), thereby injecting said sample in said analytical means (112).
**characterized in that** the ports (32, 34) are independently actuated, and that said method comprises pressurizing the sampling loop by performing the intermediary steps of:
c) closing the outlet (110) of said sampling loop (102) by actuating the corresponding port (32, 34) to isolate said sampling loop (102); and
d) providing fluid communication from the carrier inlet (104) to the inlet (100) of the sampling loop (102) by actuating the corresponding port (32, 34) to pressurize said sampling loop (102).

## Patentansprüche

1. Mit Diaphragma abgedichtetes Ventil (22, 84, 128, 164), umfassend:
einen ersten Körper (24) mit einer ersten Grenzfläche (26), die mit einem ausgesparten Fluidverbindungskanal (28), der darin verläuft und einen schleifenförmigen Abschnitt umfasst, versehen ist, wobei der erste Körper (24) eine erste, eine zweite und eine gemeinsame Fluiddurchgangsöffnung (32, 34, 36) aufweist, wobei jede der Durchgangsöffnungen (32, 34, 36) zum Verbinden von jeder der Durchgangsöffnungen (32, 34, 36) durch den Fluidverbindungskanal (28) miteinander in den ausgesparten Fluidverbindungskanal (28) mündet;
einen zweiten Körper (44), der mit dem ersten Körper (24) verbunden ist und eine zweite Grenzfläche (46) aufweist, die der ersten Grenzfläche (26) zugekehrt ist, wobei der zweite Körper (44) einen ersten und einen zweiten Durchgang (48, 50) aufweist, wobei jeder der Durchgänge (48, 50) jeweils einem der ersten und zweiten Durchgangsöffnungen (32, 34) zugekehrt ist;
ein Dichtungsglied (52), das zusammendrückbar zwischen der ersten und zweiten Grenzfläche (26, 46) angeordnet ist, wobei das Dichtungsglied (52) eine Form aufweist, die zum Abdecken der ersten und zweiten Durchgangsöffnung (32, 34) geeignet ist;
einen ersten und einen zweiten Plungerkolben (54, 56), die jeder jeweils verschiebbar in einem der Durchgänge (48, 50) des zweiten Körpers (44) angeordnet sind, wobei jeder der Plungerkolben (54, 56) eine geschlossene Position und eine offene Position aufweist; und
Stellgliedmittel (58) zum Stellen von jedem der Plungerkolben (54, 56) zwischen seiner geschlossenen und offenen Position;
**dadurch gekennzeichnet, dass**:
jede der ersten und zweiten Durchgangsöffnungen (32, 34) mit einem Sitz (42) versehen ist, der derart angeordnet ist, dass Fluidverbindung darum herum innerhalb des Verbindungskanals (28) ermöglicht ist; und
in der geschlossenen Position jeder der Plungerkolben (54, 56) das Dichtungsglied (52) nach unten an den Sitz (42) der entsprechenden Durchgangsöffnung (32, 34) zum Schließen der entsprechenden Durchgangsöffnung (32, 34) presst, und in der offenen Position jeder der Plungerkolben (54, 56) vom Sitz (42) der entsprechenden Durchgangsöffnung (32, 34) weg verläuft, um Fluidverbindung zwischen der entsprechenden Durchgangsöffnung (32, 34) und dem Kanal (28) zu ermöglichen.

2. Mit Diaphragma abgedichtetes Ventil (22, 84, 128, 164) nach Anspruch 1, wobei die Stellgliedmittel jeden der Plungerkolben (54, 56) unabhängig stellen.

3. Mit Diaphragma abgedichtetes Ventil (22, 84, 128, 164) nach Anspruch 1, wobei jede der ersten und zweiten Grenzflächen (26, 46) eine plane Form aufweist.

4. Mit Diaphragma abgedichtetes Ventil (22, 84, 128, 164) nach Anspruch 1, wobei der Sitz (42) von jeder der ersten und zweiten Durchgangsöffnungen (32, 34) einen erhöhten Abschnitt umfasst.

5. Mit Diaphragma abgedichtetes Ventil (22, 84, 128, 164) nach Anspruch 1, wobei die Form des Dichtungsglieds (52) dazu geeignet ist, den Fluidverbindungskanal (28) abzudecken.

6. Mit Diaphragma abgedichtetes Ventil (22, 84, 128, 164) nach Anspruch 1, wobei das Dichtungsglied (52) eine Polymerscheibe (55) umfasst.

7. Mit Diaphragma abgedichtetes Ventil (22, 84, 128, 164) nach Anspruch 1, wobei das Dichtungsglied ein Teflon^{™}-Distanzstück, ein Metalldiaphragma (53) und ein Polymerdiaphragma (55) umfasst, die jedes in gestapelter Beziehung angeordnet sind, wobei das Polymerdiaphragma (55) an den Sitz (42) von jeder der ersten und zweiten Durchgangsöffnungen (32, 34) pressbar ist.

8. Mit Diaphragma abgedichtetes Ventil (128) nach Anspruch 8, wobei das Dichtungsglied (52) ferner eine Dichtungsplatte (130) umfasst, die zum Halten des Teflon^{™}-Distanzstücks (51) am ersten Körper (24) angebracht ist, wobei das Metalldiaphragma (53) und das Polymerdiaphragma (55) dazwischen angeordnet sind.

9. Mit Diaphragma abgedichtetes Ventil (22, 84, 128, 164) nach Anspruch 1, wobei jeder der Plungerkolben (54, 56) am Dichtungsglied (52) angebracht ist.

10. Mit Diaphragma abgedichtetes Ventil (22, 84, 128, 164) nach Anspruch 1, wobei die Stellgliedmittel (58) ein erstes und ein zweites Solenoid (60, 62) umfassen, die jedes jeweils einen der Plungerkolben (54, 56) stellen.

11. Mit Diaphragma abgedichtetes Ventil (22, 84, 128, 164) nach Anspruch 10, wobei die Stellgliedmittel (58) ferner erste und zweite elastische Mittel (64, 66) umfassen, die jedes zum Vorspannen des entsprechenden Plungerkolbens (54, 56) jeweils an einem entsprechenden Plungerkolben (54, 56) angebracht sind.

12. Mit Diaphragma abgedichtetes Ventil (22, 84, 128, 164) nach Anspruch 1, wobei jeder der Plungerkolben (54, 56) eine vorgegebene Ruheposition aufweist, die eine entsprechende der offenen und geschlossenen Position versieht.

13. Mit Diaphragma abgedichtetes Ventil (22, 84, 128, 164) nach Anspruch 1, wobei sich der erste Plungerkolben (54) normalerweise in der offenen Position befindet, während sich der zweite Plungerkolben (56) normalerweise in der geschlossenen Position befindet.

14. Mit Diaphragma abgedichtetes Ventil (22, 84, 128, 164) nach Anspruch 1, wobei das Ventil ferner eine Spülumlaufleitung (68) umfasst, umfassend:
eine ringförmige Aussparung (70), die in der ersten Grenzfläche (26) verläuft und den Fluidverbindungskanal (28) umgibt; und
einen Fluideinlass (72) und einen Fluidauslass (74), die jeder eine Öffnung aufweisen, welche in der ringförmigen Aussparung (70) liegt, um einen fortlaufenden Fluidstrom in der ringförmigen Aussparung (70) vorzusehen.

15. Chromatographisches Analysesystem (80, 126), umfassend:
ein mit Diaphragma abgedichtetes Ventil (22, 84, 128, 164) gemäß Anspruch 14; und
Überwachungsmittel (82), die betriebsfähig mit dem Fluidauslass (74) zum Überwachen eines Fluids, das dort hindurchtritt, verbunden sind.

16. Chromatographisches Analysesystem (80, 126) nach Anspruch 15, wobei die Überwachungsmittel (82) einen Reinheitsdetektor zum Erkennen von Verunreinigung des Fluids umfassen.

17. Chromatographisches Analysesystem (80, 126) nach Anspruch 15, wobei die Überwachungsmittel (82) zum fortlaufenden Überwachen des Fluids geeignet sind.

18. Mit Diaphragma abgedichtetes Ventil (84, 128, 164) nach Anspruch 1, wobei:
die erste Grenzfläche (26) des ersten Körpers (24) mit mehreren deutlich ausgesparten Fluidverbindungskanälen (28), die darin verlaufen, versehen ist, wobei der erste Körper (24) mehrere Durchgangsöffnungssätze aufweist, die jeder eine erste, eine zweite und eine gemeinsame Fluiddurchgangsöffnung (32, 34, 36) umfassen, wobei jede Durchgangsöffnung (32, 34, 36) eines entsprechenden Satzes zum jeweiligen Verbinden von jeder Durchgangsöffnung (32, 34, 36) des entsprechenden Satzes durch den entsprechenden Fluidverbindungskanal (28) miteinander jeweils in den ausgesparten Fluidverbindungskanal (28) mündet, wobei jede der ersten und zweiten Durchgangsöffnung (32, 34) der Sätze mit einem Sitz (42) versehen ist, der derart angeordnet ist, dass Fluidverbindung darum herum innerhalb des entsprechenden Verbindungskanals (28) ermöglicht ist;
der zweite Körper (44) mehrere Durchgangspaare aufweist, die jedes einen ersten und einen zweiten Durchgang (48, 50) umfassen, wobei jeder Durchgang (48, 50) eines entsprechenden Paars jeweils einer der ersten und zweiten Durchgangsöffnung (32, 34) eines entsprechenden Satzes zugekehrt ist; und
das mit Diaphragma abgedichtete Ventil (84, 128, 164) mehrere Paare von ersten und zweiten Plungerkolben (54, 56) umfasst, wobei jeder Plungerkolben (54, 56) eines entsprechenden Paars jeweils verschiebbar in einem der Durchgänge (48, 50) eines entsprechenden Paars angeordnet ist, wobei jeder der Plungerkolben (54, 56) eine geschlossene Position, in der der entsprechende Plungerkolben (54, 56) das Dichtungsglied (52) nach unten an den Sitz (42) der entsprechenden Durchgangsöffnung (32, 34) zum Schließen der entsprechenden Durchgangsöffnung (32, 34) presst, und eine offene Position aufweist, in der der Plungerkolben (54, 56) vom Sitz (42) der entsprechenden Durchgangsöffnung (32, 34) weg verläuft, wodurch eine Fluidverbindung zwischen der entsprechenden Durchgangsöffnung (32, 34) und dem Kanal (28) ermöglicht ist, wobei die Stellgliedmittel (58) jeden der Plungerkolben (54, 56) zwischen ihrer geschlossenen und offenen Position stellen.

19. Mit Diaphragma abgedichtetes Ventil (84, 128, 164) nach Anspruch 18, wobei das Ventil ferner eine Spülumlaufleitung (68) umfasst, umfassend:
eine ausgesparte Fluidleitungsschleife (86), die in der ersten Grenzfläche (26) verläuft, wobei die Fluidleitungsschleife (86) eine äußere ringförmige Aussparung (88) und eine innere Aussparung (90) umfasst, die jede in der ersten Grenzfläche (26) verlaufen, wobei die Fluidleitungsschleife (86) ferner mehrere Trennungsaussparungen (92)umfasst, die radial in der ersten Grenzfläche (26) verlaufen, wobei jede der Trennungsaussparungen (92) zum Definieren von mehreren ersten Grenzflächenabschnitten (94), die voneinander isoliert sind, mit jeder der inneren und äußeren Aussparung (88, 90) verbunden ist, wobei jeder der ersten Grenzflächenabschnitte (94) einen der Fluidverbindungskanäle (28) umschließt; und
einen Fluideinlass (72) und einen Fluidauslass (74), die jeder eine Öffnung aufweisen, welche an der ersten Grenzfläche (26) liegt, wobei jeder des Einlasses (72) und des Auslasses (74) in fortlaufender Fluidverbindung mit einer jeweiligen der inneren und äußeren Aussparung (88, 90) steht, um einen fortlaufenden Fluidstrom in der ausgesparten Fluidleitungsschleife (86) vorzusehen.

20. Mit Diaphragma abgedichtetes Ventil (22, 84, 128, 164) nach Anspruch 18, wobei jeder des ersten und zweiten Durchgangs (32, 34) kreisförmig in einem Durchgangsöffnungskreis (96) angeordnet ist, der mit der ersten Grenzfläche (26) konzentrisch ist.

21. Mit Diaphragma abgedichtetes Ventil (84, 128, 164) nach Anspruch 18, wobei die Stellgliedmittel (58) jeden der Plungerkolben (54, 56) unabhängig stellen.

22. Mit Diaphragma abgedichtetes Ventil (84, 128, 164) nach Anspruch 18, wobei die Stellgliedmittel (58) mehrere Paare von ersten und zweiten Solenoiden (60, 62) umfassen, wobei jedes Solenoid (60, 62) eines entsprechenden Paars jeweils einen entsprechenden der Plungerkolben (54, 56) eines entsprechenden Paars stellt.

23. Mit Diaphragma abgedichtetes Ventil (84, 128, 164) nach Anspruch 18, wobei die Stellgliedmittel einen Drehnocken (118) mit einer Nockengrenzfläche (120) in Kontaktbeziehung mit jedem der Plungerkolben (54, 56) umfassen, wobei die Nockengrenzfläche (120) mehrere ausgesparte Abschnitte (122) und mehrere vorstehende Abschnitte (124) umfasst, die besonders zum Stellen von jedem der Plungerkolben (54, 56) in einer jeweiligen seiner geschlossenen und offenen Positionen angeordnet und gegen jeden der Plungerkolben (54, 56) verschiebbar sind.

24. Mit Diaphragma abgedichtetes Ventil (164) nach Anspruch 18, wobei jeder der ersten Plungerkolben (54) eine vorgegebene erste Länge aufweist, wobei jeder der zweiten Plungerkolben (56) eine vorgegebene zweite Länge aufweist, die länger als die erste Länge ist, wobei die Stellgliedmittel (58) ein erstes konzentrisches Stellglied zum Stellen von jedem der ersten Plungerkolben und ein zweites konzentrisches Stellglied zum Stellen von jedem der zweiten Plungerkolben umfassen, wobei das erste Stellglied eine Stoßplatte (166) für kurze Plungerkolben zum Pressen von jedem der ersten Plungerkolben (54) nach unten umfasst, wobei das erste Stellglied ferner einen oberen Kolben (168) und eine Welle (170) umfasst, die besonders zum Einwirken gegen die Stoßplatte (166) zum Stellen von jedem der ersten Plungerkolben (54) angeordnet sind, wobei das zweite Stellglied einen unteren Kolben (172) umfasst, der zum Hinunterpressen von jedem der zweiten Plungerkolben (156) um die Welle (170) herum verläuft.

25. Mit Diaphragma abgedichtetes Ventil (128) nach Anspruch 18, wobei jeder der ersten Plungerkolben (54) eine vorgegebene erste Länge aufweist, wobei jeder der zweiten Plungerkolben (56) eine vorgegebene zweite Länge aufweist, die länger als die erste Länge ist, wobei die Stellgliedmittel (58) ein erstes und ein zweites unabhängiges Stellglied zum Stellen von jedem der ersten Plungerkolben (54) bzw. von jedem der zweiten Plungerkolben (56) umfassen, wobei das erste Stellglied eine Stoßplatte (132) für kurze Plungerkolben umfasst, die dazu geeignet ist, jeden der ersten Plungerkolben (54) nach unten zu pressen, wobei das erste Stellglied ferner erste und zweite Solenoide (134, 136) umfasst, die besonders zum Einwirken gegen die Stoßplatte (132) für kurze Plungerkolben zum Stellen von jedem der ersten Plungerkolben (54) angeordnet sind, wobei das zweite Stellglied ein Stoßelement (146) für lange Plungerkolben umfasst, das koaxial zur Stoßplatte (132) für kurze Plungerkolben ist und zum Hinunterpressen von jedem der zweiten Plungerkolben (56) geeignet ist, wobei das zweite Stellglied ferner erste und zweite Solenoide (148, 150) umfasst, die besonders zum Einwirken gegen das Stoßelement (146) für lange Plungerkolben zum Stellen von jedem der zweiten Plungerkolben (56) angeordnet sind.

26. Chromatographisches Analyseverfahren, folgende Schritte umfassend:
a) Vorsehen eines Fluidprobenahmesystems (106), das ein mit Diaphragma abgedichtetes Ventil (84) umfasst, welches mit mehreren Durchgangsöffnungen (32, 34) versehen ist, die seriell miteinander verbunden sind, wobei das Fluidprobenahmesystem (106) ferner einen Probenahmeeinlass (108), einen Trägereinlass (104), eine Probenahmeschleife (102) mit einem Einlass (100) und einem Auslass (110), eine Probenentlüftungsleitung (98) und Analysemittel (112), die mit einem Einlass (114) versehen sind, umfasst, die jedes betriebsfähig durch eine entsprechende der Durchgangsöffnungen (32, 34) mit dem Ventil (84) verbunden sind;
b) Vorsehen von Fluidverbindung vom Probeneinlass (108) zum Einlass (100) der Probenahmeschleife (102) durch Stellen der entsprechenden Durchgangsöffnungen (32, 34), wodurch eine Fluidprobe in der Probenahmeschleife (102) vorgesehen wird;
e) Verhindern von Fluidverbindung von jeder der Durchgangsöffnungen (32, 34) zu den restlichen Durchgangsöffnungen durch Stellen der entsprechenden Durchgangsöffnungen; und
f) Vorsehen von Fluidverbindung vom Auslass (110) der Probenahmeschleife (102) zum Einlass (114) der Analysemittel (112) durch Stellen der entsprechenden Durchgangsöffnung (32, 34), wodurch die Probe in die Analysemittel (112) eingespritzt wird;
**dadurch gekennzeichnet, dass** die Durchgangsöffnungen (32, 34) unabhängig voneinander gestellt werden, und dass das Verfahren das Druckbeaufschlagen der Probenahmeschleife durch Durchführen der folgenden Zwischenschritte umfasst:
c) Schließen des Auslasses (110) der Probenahmeschleife (102) durch Stellen der entsprechenden Durchgangsöffnung (32, 34) zum Isolieren der Probenahmeschleife (102); und
d) Vorsehen von Fluidverbindung vom Trägereinlass (104) zum Einlass (100) der Probenahmeschleife (102) durch Stellen der entsprechenden Durchgangsöffnung (32, 34) zum Druckbeaufschlagen der Probenahmeschleife (102).

## Revendications

1. Vanne à membrane d'étanchéité (22, 84, 128, 164) comprenant :
un premier corps (24) ayant une première interface (26) munie d'un canal évidé de communication de fluide (28) s'étendant dans celle-ci et comprenant une partie en forme de boucle, ledit premier corps (24) ayant un premier orifice de fluide, un deuxième orifice de fluide et un orifice de fluide commun (32, 34, 36), chacun desdits orifices (32, 34, 36) s'ouvrant dans ledit canal évidé de communication de fluide (28) pour interconnecter entre-eux chacun desdits orifices (32, 34, 36) à travers ledit canal de communication de fluide (28) ;
un deuxième corps (44) interconnecté avec ledit premier corps (24) et ayant une deuxième interface (46) faisant face à ladite première interface (26), ledit deuxième corps (44) ayant des premier et deuxième passages (48, 50), chacun desdits passages (48, 50) faisant face à l'un desdits premier et deuxième orifices (32, 34) respectivement ;
un élément d'étanchéité (52) positionné de manière compressible entre lesdites première et deuxième interfaces (26, 46), ledit élément d'étanchéité (52) ayant une forme adaptée pour recouvrir lesdits premier et deuxième orifices (32, 34) ;
des premier et deuxième plongeurs (54, 56), chacun étant respectivement disposé de manière coulissante dans l'un desdits passages (48, 50) dudit deuxième corps (44), chacun desdits plongeurs (54, 56) ayant une position fermée et une position ouverte ; et
un moyen d'actionnement (58) destiné à actionner chacun desdits plongeurs (54, 56) entre lesdites positions fermée et ouverte de ceux-ci ;
**caractérisé en ce que** :
chacun desdits premier et deuxième orifices (32, 34) est muni d'un siège (42) disposé de manière à permettre une communication de fluide autour de celui-ci dans ledit canal de communication (28) ; et
dans la position fermée, chacun desdits plongeurs (54, 56) presse l'élément d'étanchéité (52) vers le bas contre le siège (42) de l'orifice correspondant (32, 34) pour fermer ledit orifice correspondant (32, 34), et dans la position ouverte, chacun desdits plongeurs (54, 56) s'étend loin du siège (42) de l'orifice correspondant (32, 34) pour permettre une communication de fluide entre l'orifice correspondant (32, 34) et ledit canal (28).

2. Vanne à membrane d'étanchéité (22, 84, 128, 164) selon la revendication 1, dans laquelle ledit moyen d'actionnement actionne indépendamment chacun desdits plongeurs (54, 56).

3. Vanne à membrane d'étanchéité (22, 84, 128, 164) selon la revendication 1, dans laquelle chacune desdites première et deuxième interfaces (26, 46) présente une forme planaire.

4. Vanne à membrane d'étanchéité (22, 84, 128, 164) selon la revendication 1, dans laquelle le siège (42) de chacun desdits premier et deuxième orifices (32, 34) comprend une partie surélevée.

5. Vanne à membrane d'étanchéité (22, 84, 128, 164) selon la revendication 1, dans laquelle la forme de l'élément d'étanchéité (52) est adaptée pour recouvrir ledit canal de communication de fluide (28).

6. Vanne à membrane d'étanchéité (22, 84, 128, 164) selon la revendication 1, dans laquelle ledit élément d'étanchéité (52) comprend un disque de polymère (55).

7. Vanne à membrane d'étanchéité (22, 84, 128, 164) selon la revendication 1, dans laquelle ledit élément d'étanchéité comprend une entretoise en Téflon™ (51), une membrane métallique (53) et une membrane en polymère (55), chacune étant agencée dans une relation d'empilement, ladite membrane en polymère (55) pouvant être pressée contre le siège (42) de chacun des premier et deuxième orifices (32, 34).

8. Vanne à membrane d'étanchéité (128) selon la revendication 8, dans laquelle ledit élément d'étanchéité (52) comprend en outre une plaque d'étanchéité (130) fixée au premier corps (24) pour maintenir ladite entretoise en Téflon™ (51), ladite membrane métallique (53) et ladite membrane en polymère (55) entre ceux-ci.

9. Vanne à membrane d'étanchéité (22, 84, 128, 164) selon la revendication 1, dans laquelle chacun desdits plongeurs (54, 56) est fixé audit élément d'étanchéité (52).

10. Vanne à membrane d'étanchéité (22, 84, 128, 164) selon la revendication 1, dans laquelle ledit moyen d'actionnement (58) comprend des premier et deuxième solénoïdes (60, 62), actionnant chacun respectivement l'un desdits plongeurs (54, 56).

11. Vanne à membrane d'étanchéité (22, 84, 128, 164) selon la revendication 10, dans laquelle ledit moyen d'actionnement (58) comprend en outre des premier et deuxième moyens élastiques (64, 66), chacun étant monté respectivement sur un plongeur correspondant (54, 56) pour solliciter ledit plongeur correspondant (54, 56).

12. Vanne à membrane d'étanchéité (22, 84, 128, 164) selon la revendication 1, dans laquelle chacun desdits plongeurs (54, 56) a une position de repos prédéterminée fournissant une position correspondante parmi lesdites positions fermée et ouverte.

13. Vanne à membrane d'étanchéité (22, 84, 128, 164) selon la revendication 1, dans laquelle ledit premier plongeur (54) se trouve normalement dans ladite position ouverte tandis que ledit deuxième plongeur (56) se trouve normalement dans ladite position fermée.

14. Vanne à membrane d'étanchéité (22, 84, 128, 164) selon la revendication 1, dans laquelle la vanne comprend en outre une conduite de circulation de purge (68), comprenant :
un évidement annulaire (70) s'étendant dans ladite première interface (26) et entourant ledit canal de communication de fluide (28) ; et
une entrée de fluide (72) et une sortie de fluide (74), ayant chacune une ouverture se trouvant dans ledit évidement annulaire (70) pour fournir un écoulement de fluide continu dans ledit évidement annulaire (70).

15. Système de chromatographie analytique (80, 126) comprenant :
une vanne à membrane d'étanchéité (22, 84, 128, 164) telle que définie dans la revendication 14 ; et
un moyen de surveillance (82) relié de manière fonctionnelle à la sortie de fluide (74) pour surveiller un fluide passant à travers celle-ci.

16. Système de chromatographie analytique (80, 126) selon la revendication 15, dans lequel ledit moyen de surveillance (82) comprend un détecteur de pureté destiné à détecter une contamination dudit fluide.

17. Système de chromatographie analytique (80, 126) selon la revendication 15, dans lequel ledit moyen de surveillance (82) est adapté pour surveiller en continu ledit fluide.

18. Vanne à membrane d'étanchéité (84, 128, 164) selon la revendication 1, dans laquelle :
la première interface (26) du premier corps (24) est munie d'une pluralité de canaux évidés de communication de fluide distincts (28) s'étendant dans celle-ci, ledit premier corps (24) ayant une pluralité d'ensembles d'orifices, comprenant chacun un premier orifice de fluide, un deuxième orifice de fluide et un orifice de fluide commun (32, 34, 36), chaque orifice (32, 34, 36) d'un ensemble correspondant s'ouvrant dans un canal correspondant parmi lesdits canaux évidés de communication de fluide (28) respectivement pour interconnecter entre-eux chaque orifice (32, 34, 36) dudit ensemble correspondant à travers ledit canal de communication de fluide correspondant (28) respectivement, chacun desdits premier et deuxième orifices (32, 34) de chacun desdits ensembles étant muni d'un siège (42) disposé de manière à permettre une communication de fluide autour de celui-ci dans ledit canal de communication correspondant (28) ;
le deuxième corps (44) a une pluralité de paires de passages, comprenant chacune des premier et deuxième passages (48, 50), chaque passage (48, 50) d'une paire correspondante faisant face respectivement à l'un desdits premier et deuxième orifices (32, 34) d'un ensemble correspondant ; et
ladite vanne à membrane d'étanchéité (84, 128, 164) comprend une pluralité de paires de premier et deuxième plongeurs (54, 56), chaque plongeur (54, 56) d'une paire correspondante étant respectivement disposé de manière coulissante dans l'un desdits passages (48, 50) d'une paire correspondante, chacun desdits plongeurs (54, 56) ayant une position fermée dans laquelle le plongeur correspondant (48, 50) presse l'élément d'étanchéité (52) vers le bas contre le siège (42) de l'orifice correspondant (32, 34) pour fermer ledit orifice correspondant (32, 34), et une position ouverte dans laquelle ledit plongeur (48, 50) s'étend loin du siège (42) de l'orifice correspondant (32, 34) pour permettre une communication de fluide entre l'orifice correspondant (32, 34) et un canal correspondant (28), le moyen d'actionnement (58) actionnant chacun desdits plongeurs (48, 50) entre lesdites positions fermée et ouverte de ceux-ci.

19. Vanne à membrane d'étanchéité (84, 128, 164) selon la revendication 18, dans laquelle la vanne comprend en outre une conduite de circulation de purge (68) comprenant :
un circuit de fluide évidé en boucle (86) s'étendant dans ladite première interface (26), ledit circuit de fluide en boucle (86) comprenant un évidement annulaire externe (88) et un évidement interne (90), chacun s'étendant dans ladite première interface (26), ledit circuit de fluide (86) comprenant en outre une pluralité d'évidements de séparation (92) s'étendant radialement dans ladite première interface (26), chacun desdits évidements de séparation (92) étant connecté à chacun desdits évidements interne et externe (88, 90) pour définir une pluralité de premières parties d'interface (94) isolées les unes des autres, chacune desdites premières parties d'interface (94) enfermant l'un desdits canaux de communication de fluide (28) ; et
une entrée de fluide (72) et une sortie de fluide (74), ayant chacune une ouverture se trouvant au niveau de ladite première interface (26), chacune de ladite entrée (72) et de ladite sortie (74) étant en communication de fluide continue avec un évidement respectif parmi lesdits évidements interne et externe (88, 90) pour fournir un écoulement de fluide continu dans ledit circuit de fluide évidé en boucle (86).

20. Vanne à membrane d'étanchéité (22, 84, 128, 164) selon la revendication 18, dans laquelle chacun desdits premier et deuxième orifices (32, 34) est agencé de manière circulaire dans un cercle d'orifice (96) concentrique par rapport à ladite première interface (26).

21. Vanne à membrane d'étanchéité (84, 128, 164) selon la revendication 18, dans laquelle ledit moyen d'actionnement (58) actionne de manière indépendante chacun desdits plongeurs (54, 56).

22. Vanne à membrane d'étanchéité (84, 128, 164) selon la revendication 18, dans laquelle ledit moyen d'actionnement (58) comprend une pluralité de paires de premier et deuxième solénoïdes (60, 62), chaque solénoïde (60, 62) d'une paire correspondante actionnant respectivement un plongeur correspondant (54, 56) d'une paire correspondante.

23. Vanne à membrane d'étanchéité (84, 128, 164) selon la revendication 18, dans laquelle ledit moyen d'actionnement comprend une came rotative (118) ayant une interface de came (120) en relation de contact avec chacun desdits plongeurs (54, 56), ladite interface de came (120) comprenant une pluralité de parties évidées (122) et une pluralité de parties protubérantes (124) particulièrement agencées et pouvant coulisser contre chacun desdits plongeurs (54, 56) pour actionner chacun desdits plongeurs (54, 56) dans une position respective parmi lesdites positions fermée et ouverte de ceux-ci.

24. Vanne à membrane d'étanchéité (164) selon la revendication 18, dans laquelle chacun desdits premiers plongeurs (54) a une première longueur prédéterminée, chacun desdits deuxièmes plongeurs (56) ayant une deuxième longueur prédéterminée plus longue que ladite première longueur, ledit moyen d'actionnement (58) comprenant un premier actionneur concentrique pour actionner chacun desdits premiers plongeurs et un deuxième actionneur concentrique pour actionner chacun desdits deuxièmes plongeurs, ledit premier actionneur comprenant une plaque de poussage de plongeurs courts (166) pour presser chacun desdits premiers plongeurs (54) vers le bas, ledit premier actionneur comprenant en outre un piston supérieur (168) et un arbre (170) particulièrement agencés pour agir contre la plaque de poussage (166) pour actionner chacun desdits premiers plongeurs (54), ledit deuxième actionneur comprenant un piston inférieur (172) s'étendant autour dudit arbre (170) pour presser chacun desdits deuxièmes plongeurs (56) vers le bas.

25. Vanne à membrane d'étanchéité (128) selon la revendication 18, dans laquelle chacun desdits premiers plongeurs (54) a une première longueur prédéterminée, chacun desdits deuxièmes plongeurs (56) ayant une deuxième longueur prédéterminée plus longue que ladite première longueur, ledit moyen d'actionnement (58) comprenant des premier et deuxième actionneurs indépendants pour actionner chacun desdits premiers plongeurs (54) et chacun desdits deuxièmes plongeurs (56) respectivement, ledit premier actionneur comprenant une plaque de poussage de plongeurs courts (132) adaptée pour presser chacun desdits premiers plongeurs (54) vers le bas, ledit premier actionneur comprenant en outre des premier et deuxième solénoïdes (134, 136) particulièrement agencés pour agir contre la plaque de poussage de plongeurs courts (132) pour actionner chacun desdits premiers plongeurs (54), ledit deuxième actionneur comprenant un élément de poussage de plongeurs longs (146) coaxial à ladite plaque de poussage de plongeurs courts (132) et adapté pour presser chacun desdits deuxièmes plongeurs (56) vers le bas, ledit deuxième actionneur comprenant en outre des premier et deuxième solénoïdes (148, 150) particulièrement agencés pour agir contre l'élément de poussage de plongeurs longs (146) pour actionner chacun desdits deuxièmes plongeurs (56).

26. Procédé de chromatographie analytique comprenant les étapes qui consistent :
a) à fournir un système d'échantillonnage de fluide (106) comprenant une vanne à membrane d'étanchéité (84) munie d'une pluralité d'orifices (32, 34) interconnectés en série les uns aux autres, ledit système d'échantillonnage de fluide (106) comprenant en outre une entrée d'échantillon (108), une entrée de support (104), une boucle d'échantillonnage (102) ayant une entrée (100) et une sortie (110), une conduite d'évacuation d'échantillon (98) et un moyen analytique (112) muni d'une entrée (114), chacun de ces éléments étant interconnecté de manière fonctionnelle à ladite vanne (84) à travers un orifice correspondant parmi lesdits orifices (32, 34) ;
b) à fournir une communication de fluide à partir de ladite entrée d'échantillon (108) à l'entrée (100) de la boucle d'échantillonnage (102) en actionnant les orifices correspondants (32, 34), fournissant ainsi un échantillon de fluide dans ladite boucle d'échantillonnage (102) ;
e) à empêcher une communication de fluide à partir de chacun desdits orifices (32, 34) aux orifices restants en actionnant les orifices correspondants ; et
f) à fournir une communication de fluide à partir de la sortie (110) de la boucle d'échantillonnage (102) à l'entrée (114) du moyen analytique (112) en actionnant l'orifice correspondant (32, 34), injectant ainsi ledit échantillon dans ledit moyen analytique (112),
**caractérisé en ce que** les orifices (32, 34) sont indépendamment actionnés, et **en ce que** ledit procédé comprend la pressurisation de la boucle d'échantillonnage en exécutant les étapes intermédiaires qui consistent :
c) à fermer la sortie (110) de ladite boucle d'échantillonnage (102) en actionnant l'orifice correspondant (32, 34) pour isoler ladite boucle d'échantillonnage (102) ; et
d) à fournir une communication de fluide à partir de l'entrée de support (104) à l'entrée (100) de la boucle d'échantillonnage (102) en actionnant l'orifice correspondant (32, 34) pour pressuriser ladite boucle d'échantillonnage (102).
